# EUROPÄISCHE PATENTSCHRIFT

(11) **EP 1 634 751 B1**
(45) Veröffentlichungstag und Bekanntmachung des Hinweises auf die Patenterteilung: **03.06.2009**
(21) Anmeldenummer: 05019654.2
(22) Anmeldetag: 09.09.2005
(51) Int. Cl.: B60J 7/12

(54) **Cabriolet-Fahrzeug**
Convertible car
Véhicule convertible

(30) Priorität: 09.09.2004 DE 102004044032
(43) Veröffentlichungstag der Anmeldung: 15.03.2006
(73) Patentinhaber: Wilhelm Karmann GmbH, 49084 Osnabrück (DE)
(72) Erfinder: Russke, Klaus, 49143 Bissendorf (DE); Kreiling, Nils, 49078 Osnabrück (DE); Bunsmann, Winfried, 49143 Bissendorf (DE); Wegert, Friedrich-H, 49086 Osnabrück (DE); Hüdepohl, Stefan, 49143 Bissendorf (DE); Weissmüller, Olaf, 49565 Bramsche (DE)

(56) Entgegenhaltungen:
- EP-A- 0 246 201
- EP-A- 0 897 823
- DE-U1- 20 210 763
- US-A- 5 100 195

## Beschreibung

Die Erfindung bezieht sich auf ein Cabriolet-Fahrzeug mit einem in seiner Schließstellung einen Fahrgastraum überspannenden und aus der Schließstellung in eine in einem rückwärtigen Fahrzeugbereich gelegene Ablagestellung überführbaren Dach, das an einem Verdeckgestängeteil sowie zumindest ein Antriebselement zur Bewegung des Daches aus seiner Schließstellung in die Ablagestellung und zurück umfassenden Verdeckgestell festlegbar ist, wobei das Antriebselement eine das Cabriolet-Fahrzeug quer durchsetzende, jeweils mit seitlichem Verdeckgestängeteilen verbindbare Zentralantriebseinheit umfasst.

Aus der DE-U-202 10 763 ist ein gattungsgemäßes Cabriolet-Fahrzeug mit einem Verdeck bekannt, das zumindest einen starren vorderen Bereich aufweist. Der vordere Bereich umfasst einen dem Verlauf eines horizontalen Querrahmenteils des Windschutzscheibenrahmens angepassten Querträger sowie sich hiervon heckwärts erstreckende seitliche Rahmenteile. Damit dieser Querträger nicht auf den Windschutzscheibenrahmenteil aufschlägt, ist eine Dämpfungseinheit vorgesehen. Seitliche Rahmenteile stehen über ein Totpunktgestänge miteinander in Verbindung, was wiederum über zugseile zu bewegen ist. Wie das Cabriolet-Fahrzeug zu öffnen und zu schließen ist, ist in dieser Druckschrift nicht näher beschrieben. Insbesondere ist nicht beschrieben, wie linke und rechte Gestängeteile antriebsmäßig zu bewegen sind.

Es ist Aufgabe der vorliegenden Erfindung, ein Cabriolet-Fahrzeug mit einem einfach bauenden Antriebselement für das Dach zur Verfügung zu stellen, mit dem das Dach mitsamt seinem Verdeckgestell wirksam und störungsunanfällig in seiner Offen- und in seiner Ablageposition zu überführen ist.

Zur Lösung dieser Aufgabe zeichnet sich das Cabriolet-Fahrzeug durch die im Anspruch 1 angegebenen Merkmale aus. Wesentliche weitere vorteilhafte Ausgestaltungen der Erfindung ergeben sich aus den Ansprüche 2 bis 55.

Bei dem erfindungsgemäßen Cabriolet-Fahrzeug kann dem Dach durch die Zentralantriebseinheit die erforderliche.Schließ- bzw. Öffnungsbewegung erteilt werden. Separate eigenständige Antriebe, beispielsweise in Seitenbereichen von Fahrzeugen, wie sie herkömmlicherweise üblich sind, sind dazu nicht erforderlich. Dies führt zu einem wesentlichen störungsfreien Betrieb, da hier ungleiche Antriebsbewegungen auf verschiedenen Fahrzeugseiten zu vermeiden sind. Zudem kann auf zahlreiche kostenintensive Bauteile verzichtet werden.

Durch die unmittelbare und starre Verbindung zwischen Torsionswelle 16 und dem Heckscheibengestänge 15.1 sowie der Hauptführungsstange 12.1 ist ohne zwischenschaltung von irgendwelchem Getriebe oder sonstigen Kraftübertragungsmitteln eine direkte Kraftkupplung zu beiden Seiten des Fahrzeuges in vorteilhafter Weise ermöglicht,

Durch die Verbindung der Zentralantriebseinheit mit den seitlichen Verdeckgestängeteilen können sonstige, den Betrieb beeinflussende oder störende Kraftübertragungs- oder z.B. Getriebeteile für die Umwandlung oder Beeinflussung der Antriebsbewegung entfallen, da über die Zentralantriebseinheit direkt und unmittelbar die Antriebsbewegung auf seitliche Verdeckgestängeteile übertragen werden kann.

Bevorzugtermaßen ist die Zentralantriebseinheit eine das Fahrzeug quer durchsetzende Torsionswelle, die mit den seitlichen Gestängeteilen bzw. Gestängehebeln verbunden ist. An dieser Torsionswelle greift ein für sich bekannter Antrieb zur Bewegung des Daches an. Ein solcher Antrieb kann elektrisch, hydraulisch oder auf andere bekannte Art direkt oder indirekt - beispielsweise über ein Vorgelege - die erforderlich Antriebskraft auf die Torsionswelle übertragen. Durch die Verwendung eines Vorgeleges kann bei Bedarf eine übersetzung realisiert werden. Zudem ist ein Vorgelege bei großen erforderlich Drehwinkeln der Torsionswelle von Vorteil.

Mit der das Fahrzeug quer durchsetzenden Torsionswelle geht auch der Vorteil einher, dass ein Antriebselement vorgesehen werden kann, das als ein im Fahrgastraum angeordnetes, durch Muskelkraft bewegliches Bedienstellglied ausgebildet ist, dessen Bewegung über einen Bewegungswandler in Öffnungs- und/oder Schließbewegungen von Verdeckgestängeteilen des Verdeckgestells umwandelbar ist. Dieser kann sich beispielsweise zwischen zwei Vordersitzen des Fahrzeuges befinden und direkt bzw. über Übertragungsteile an der Zentralantriebseinheit angreifen. Der Bewegungswandler kann dabei so ausgebildet sein, dass ein Übersetzungsverhältnis von 1:1 vorliegt, also der Weg der Bewegung des Bedienstellgliedes dem Weg des Daches bzw. seines Verdeckgestells entspricht. Durch eine entsprechende Auslegung des Bewegungswandlers sind jedoch auch Über- bzw. Untersetzungsverhältnisse darstellbar.

Bevorzugtermaßen ist das Bedienstellglied ein Bedienhebel, der in seiner Ruhestellung z.B. im Fahrgastraum zwischen den Sitzen in einer aufrechten Position und mithin in einer Vertikalstellung nach oben ragt. Dabei ist er zweckmäßigerweise im Bereich der Kopfstützen eines der Sitze gelegen, so dass er weder den Schulter- noch den Kopfbereich der Fahrzeuginsassen behindert bzw. gefährdet.

Für eine Bedienung ist er in den Fahrgastraum einzuschwenken, wozu bevorzugtermaßen das Bedienstellglied so ausgebildet ist, dass es von einem Haupthebel entkoppelbar ist und eingekoppelt werden kann, so dass er zunächst in eine Bedienposition in den Fahrgastraum aus der Ruhestellung eingeschwenkt werden kann, sodann mit einem Hebel des Bewegungswandlers gekoppelt wird und alsdann durch beispielsweise Verschwenken aus einer waagerechten Position in die Vertikalposition über den Bewegungswandler das Dach bzw. das Verdeckgestell aus einer Schließstellung in eine Ablagestellung bzw. umgekehrt überführt.

Der Bewegungswandler weist dazu zweckmäßigerweise Übertragungsgestängeteile auf, die in die ansonsten herkömmliche Verdeckgestängekinematik angreifen, und zwar an solchen Stellen, wo auch herkömmlicherweise schon Betätigungskräfte eingeleitet werden.

Die Entkopplung kann über ein Drehgelenk an dem Bediengestellglied vollzogen werden, wozu auch noch ein Federzug vorgesehen werden kann, um das Bediengestänge in Gestalt eines Bedienhebels gegen Federkraft nach vorne zu ziehen, um es von einem Übertragungshebel des Bewegungswandlers abzuziehen. Danach kann das Bedienstellglied nach oben in seine Ruhestellung verschwenkt werden und beispielsweise über einen Rastclip oder ein Klammerelement arretiert werden.

Es ist ebenfalls möglich, dass ein Antriebselement vorgesehen ist, das eine im Fahrgastraum angeordnete Hubvorrichtung mit einem durch Muskelkraft beaufschlagbaren Hubstellmittel zur Bewegung des Daches aus einer Schließstellung in die Ablagestellung und zurück vorsieht.

Damit ist ein Cabriolet-Fahrzeug zur Verfügung gestellt, bei dem mittels der Hubvorrichtung innerhalb des Fahrgastraumes über die Betätigung des Hubstellgliedes durch Muskelkraft, sei es durch Fuß- bzw. Beinmuskelkraft oder durch Hand- und Armmuskelkraft über das Hubstellglied das Dach zu öffnen oder zu schließen ist. Dazu wird das Hubstellmittel bewegt, beispielsweise auf- und abbewegt oder in eine Richtung bewegt mit einem Rückstelleerhubweg, wobei über geeignete Übertragungsmittel die ausgeübten Hubbewegungen in Öffnungs- und Schließbewegung des Verdeckgestells bzw. des Daches des Cabriolet-Fahrzeuges umgewandelt werden.

Alternativ ist ebenfalls möglich, beispielsweise mittels des Hubstellgliedes einen Druckspeicher aufzupumpen bzw. einen in einem Speicher befindliches Hydraulikmedium zu pumpen, um durch die Pumpbewegungen ein Hydraulikstellglied derart zu beaufschlagen, dass Antriebsstellbewegungen dieses Hubzylindermittels ausgeübt werden, um die entsprechenden Öffnungs- und Schließbewegungen durchzuführen. Auch dazu stehen entsprechende Verbindungselemente für die Verdeckgestellteile in kostengünstiger Weise zur Verfügung.

In einer bevorzugten Ausführungsform ist das Hubstellmittel als z.B. U-förmiger Betätigungshebel ausgebildet, der beispielsweise mittig zwischen zwei Vordersitzen im Fahrgastraum gelegen ist, beispielsweise direkt hinter einem Getriebewahlhebel. Dieser Betätigungshebel kann angehoben und wiederum abgesenkt werden und ist mithin schwenkbar. Er ist mit einem Übertragungselement, beispielsweise mit einem Zahnsegment über ein Klinkensegment derart zu verbinden, dass das schwenkbar abgestützte Zahnsegment in verschiedene Schwenkstellungen zu überführen ist. Dies kann so gestaltet sein, dass z.B. der Betätigungshebel über das Klinkensegment nur während der Anhebebewegung kraftschlüssig die Antriebsbewegung auf das Zahnsegment im Sinne einer Verschwenkung überträgt, während einer nachfolgenden Bewegung zurück in die in etwa horizontale Ausgangslage, durch das Klinkensegment vom Zahnsegment entkoppelt wird. Dies kann durch eine einfache Gestaltung der Zähne des Zahnsegmentes in Zusammenhang mit einer schwenkbaren Abstützung des Klinkensegmentes am Betätigungshebel erfolgen.

Das Zahnsegment kann über ein Übertragungsgestänge, beispielsweise einen Übertragungshebel, mit Gestängeteilen des Verdeckgestells verbunden sein, so dass durch die unterschiedlichen Schwenkstellungspositionen die Verdeckgestängeteile mechanisch in die entsprechenden Schließstellungs- bzw. Ablagepositionen überführt werden, so dass durch ein mehrmaliges Betätigen des Betätigungshebels eine komplette Schließbewegung des Daches bzw. eine komplette Ablagebewegung des Daches zu vollziehen ist, und zwar vom Inneren des Fahrzeuges aus. Die Bedienperson des Fahrzeuges kann mithin auch ohne das Erfordernis des Aussteigens die Öffnungs- und Schließbewegung durchführen, ohne dass es zusätzlicher weiterer motorischer Bauteile bedarf. Alternativ ist es ebenfalls möglich, beispielsweise die entsprechenden Hubbewegungen durch ein Fußpedal durchzuführen. Das kann beispielsweise ein Fußpedal sein mit einem Bowdenzug als Verbindungselement zu entsprechenden Verdeckgestängeteilen. Auch hier ist es wiederum möglich, durch mehrmaliges Betätigen z.B. eines Fußpedals mit anschließendem Leerhub die Komplettbewegung durchzuführen. Alternativ ist es jedoch auch möglich, den Pedalweg derart auf den gesamt benötigten Übertragungsweg eines festen Bowdenzuges so auszulegen, dass in einer Pedaltrittrichtung die vollständige Schließbewegung durchzuführen ist und in anderer Richtung die entsprechende Öffnungsbewegung.

Um den Restschließweg nach Beendigung des Schließbewegungszyklus in bewährter Art derart durchführen zu können, dass die Bedienperson das Dach in die Endverriegelungsstellung überführt und dann mittels der Verriegelungsmittel an einem karosserieseitigen Querrahmen im Bereich der Windschutzscheibe verriegelt, ohne dass diese Endschließbewegung über Übertragungshebel, ein Zahnsegment und dergleichen auf das Hubstellglied einwirkt, ist in besonders bevorzugter Weise vorgesehen, dass im Bereich der Verbindung mit den Verdeckgestängeteilen ein Kulissenstück vorgesehen ist, das eine Kulisse hat, die auf den Endschließweg des Verdeckgestells hin abgestimmt ist und in der ein mit dem Übertragungshebel verbundener Mitnehmer über z.B. ein Bolzenelement abläuft bzw. in dieser geführt ist. Damit können Verdeckgestängeteile relativ zu z.B. dem Übertragungshebel, dem Zahnsegment und dem Betätigungshebel bzw. -bügel bewegt werden, so dass die Endschließbewegung des Daches durchzuführen ist. Umgekehrt gilt dies in der Ablegestellung genauso.

Um in baulich einfacher Weise die entsprechenden Antriebsbewegungen auch auf beide seitlichen Lenker des Verdeckgestells gleichmäßig übertragen zu können, ist darüber hinaus in einer besonders bevorzugten Ausgestaltung vorgesehen, dass eine zwischen seitlichen Verdeckgestängeteilen, z.B. zwischen zwei Lenkern, eine zentrale Torsionsantriebseinheit in z.B. Gestalt einer Torsionswelle vorgesehen ist, die sich quer durch das Fahrzeug zu den jeweils wechselseitig seitlich vorgesehenen Verdeckgestängeteilen erstreckt und an denen auch zentral Übertragungsteile des Hubstellmittels, beispielsweise der Übertragungshebel mit seinem Mitnehmer, angreift, indem dort z.B. das Kulissenstück verdrehfest mit der Torsionswelle verbunden ist.

Des weiteren ist bevorzugtermaßen vorgesehen, dass die Heckscheibe über Heckscheibengestängeteile und Eckspriegel über Eckspriegelgestängeteile mit dem Antriebselement verbindbar sind, wobei sowohl die Heckscheibe mit den Heckscheibegestängeteilen als auch der Eckspriegel über die Eckspriegelgestängeteile relativ zu dem in einer Ruhestellung befindlichen Antriebselement verschwenkbar und mit dem Haltebügel in eine hochgeschwenkte Montage- oder Wartungsstellung überführbar sind.

Bei dem erfindungsgemäßen Cabriolet-Fahrzeug ist zunächst die Heckscheibe über Heckscheibengestängeteile mit dem Antriebselement verbunden, so dass diese Heckscheibe nicht nur innerhalb der Dachhaut festgelegt ist, sondern auch gesteuerte Öffnungsbewegungen des Daches mitmachen kann und auch in der Schließstellung des Daches über die Heckscheibengestängeteile sicher gehaltert ist. Dies ist insbesondere für Fahrzeuge mit einem relativ hohen Geschwindigkeitspotential erstrebenswert. Um aber auch bei einem solchen Cabriolet-Fahrzeug mit einer starren Heckscheibe, die zudem noch über besondere Heckscheibengestängeteile gehaltert und geführt ist, über den Haltebügel die Montage- und Wartungsstellung einnehmen zu können, sind die Heckscheibengestängeteile und im übrigen auch die Eckspriegelgestängeteile auf besondere Art und Weise mit dem Antriebselement verbunden, so dass Haltebügel, Heckscheibe mitsamt den Heckscheibengestängeteilen und Eckspriegel mitsamt dem Eckspriegelgestängeteilen auch bei ansonsten geschlossenem Dach und nicht bewegtem Antriebselement in die Montage- und Wartungsstellung hochgeklappt werden können. Dazu sind die Eckspriegelgestängeteile und die Heckscheibengestängeteile relativ zu dem Antriebselement verschwenkbar, so dass sie in Schließstellung des Daches während der Öffnungsbewegung des Haltebügels in eine relativ verschwenkte Lage überführt werden können, um eine hinreichend große Montage- bzw. Wartungsöffnung für z.B. Arbeiten an einem Mittelmotor oder aber auch Arbeiten an Verdeckgestellteilen zu ermöglichen.

Bevorzugtermaßen ist das Antriebselement als zentrale Antriebswelle ausgebildet, an der ein zentraler manueller oder motorischer Antrieb zum Aufschwenken und Schließen des Daches angreifen kann, wobei eine das Fahrzeug quer durchsetzende Torsionswelle seitliche Verdeckgestellteile wie Lenker und dergleichen bewegungsfest miteinander verbindet. Damit ist ein sicheres und verkantungsfreies Öffnen des Daches gewährleistet. Zu dieser Antriebs- bzw. Torsionswelle sind in deren Ruhestellung, also wenn sich diese nicht dreht bzw. verschwenkt, die Heckscheibengestängeteile und die Eckspriegelgestängeteile relativ zu verschwenken. Da der Haltebügel des Daches und das Verdeckgestell in separaten Lagerstellen gelagert sind, kann der Haltebügel relativ zu den Verdeckgestellteilen verschwenkt werden, woraufhin die Eckspriegelgestängeteile und die Heckscheibengestängeteile aufgrund ihrer relativen Verschwenkbarkeit einer solchen Schwenkbewegung des Haltebügels folgen können.

Weitere vorteilhafte Ausgestaltungen der Erfindung ergeben sich aus weiteren Unteransprüchen, der Zeichnung und der nachfolgenden Beschreibung. In der Zeichnung zeigen:
- Fig. 1: ein erstes Ausführungsbeispiel eines Cabriolet-Fahrzeuges nach der Erfindung in einer schematischen perspektivischen Schrägansicht mit den aufgeschwenkten Teilen in der Wartungs- oder Montagestellung,
- Fig. 2: das Ausführungsbeispiel nach Fig. 1 in einer Seitenansicht,
- Fig. 3: eine zu Fig. 1 analoge Darstellung mit Darstellung der verschiedenen Schwenkstellungen von Haltebügel, Heckscheibe und Eckspriegel,
- Fig. 4: eine zu Fig. 3 analoge Darstellung in Seitenansicht der Teile,
- Fig. 5: in einer schematischen Seitenansicht ein alternatives Ausführungsbeispiel eines Cabriolet-Fahrzeuges nach der Erfindung mit längenveränderlichem Heckscheibengestängeteil in der geschlossenen Stellung des Daches und des Haltebügels,
- Fig. 6: eine schematische perspektivische Seitenansicht des Ausführungsbeispiels nach Fig. 5 in der Wartungs- und Montagestellung des Haltebügels der Heckscheibe und des Eckspriegels,
- Fig. 7: das Ausführungsbeispiel nach den Fig. 5 und 6 in einer perspektivischen Teilansicht schräg von hinten, und
- Fig. 8: eine zu Fig. 7 analoge Darstellung mit Darstellung des Haltebügels der Heckscheibe und des Eckspriegels einmal in der geschlossenen Stellung des Haltebügels und einmal in der Wartungs- und Montagestellung,
- Fig. 9: eine vergrößerte perspektivische Darstellung des Ausführungsbeispiels nach Fig. 1,
- Fig. 10: bis 14 in verschiedenen Öffnungspositionen des Daches in jeweils einer Seitenansicht das Z-förmig abzulegende Dach während seiner Öffnungsphase,
- Fig. 15: ein Ausführungsbeispiel für eine Anbindung des Dachbezuges an den Haltebügel,
- Fig. 16: ein Ausführungsbeispiel einer Abdichtung des Spannbügels gegenüber der Karosserie,
- Fig.17: eine zu Fig. 12 analoge Darstellung (vergrößert) mit Darstellung der sichtbaren Linien von Teilen ohne eine Darstellung von Gestängeteilen zwecks Verdeutlichung der direkt miteinander verbundenen Teile, und
- Fig. 18: eine zu Fig. 12 analoge Darstellung, bei der ebenfalls nicht sichtbare Linien von Teilen und Gestängeteile nicht dargestellt sind zwecks Verdeutlichung der direkt miteinander verbundenen Teile.

In der Zeichnung sind grundsätzlich gleichwirkende Teile mit übereinstimmenden Bezugsziffern beziffert. Allgemein mit 1 ist ein Cabriolet-Fahrzeug beziffert mit einer Fahrzeugkarosserie 2, einem Heckbereich 3, angedeuteten Rädern 4 sowie einem allgemein mit 5 bezifferten Dach, das ein Verdeckgestell 6 sowie einen Haltebügel 7 aufweist. Das Cabriolet-Fahrzeug soll in dem dargestellten Ausführungsbeispiel mit einem Mittelmotor ausgerüstet sein. Über einen Deckel 8 ist der Haltebügel 7 abzudecken. Das als Softtop ausgebildete Dach ist mit einer starren Heckscheibe 10 ausgerüstet. Das Verdeckgestell hat einen vorderen Verdeckanbindungsbügel 11, seitliche Lenker 12, Querspriegel 13 sowie einen Eckspriegel 14. Der Verdeckanbindungsbügel 11 ist eine feste Dachspitze, die entweder vom Verdeckstoff übergriffen ist oder an deren hinterem Ende sich der Verdeckstoff anschließt.

Die Heckscheibe 10 ist über ein Verdeckgestängeteil 15 mit einer zentralen, das Cabriolet-Fahrzeug quer durchsetzenden Torsionswelle 16 verbunden. Diese Torsionswelle 16 ist bei 17 in einem Verdeckgestellhauptlager gelagert. Der Haltebügel 7 ist separat in der Karosserie bei 18 schwenkbeweglich gelagert. Die Heckscheibe 10 ist in die mit 19 skizzierte Dachbahn des Daches integriert.

Aufgrund der Heckscheibengestängeteile 15 ist auch in der geschlossenen Position des Daches die Heckscheibe sicher gehaltert und abgestützt. Über die zentrale Torsionswelle 16 kann über einen manuellen oder motorischen Antrieb das Dach insgesamt in seine offene Position gebracht werden. Aufgrund dieses zentralen Antriebes sind nicht an beiden Seiten des Verdeckgestells angeordnete separate Antriebe notwendig. Zudem wird die Antriebskraft sicher zu beiden Seiten des Verdeckes überführt, was einen störungsfreien Öffnungs- und Schließbetrieb gewährleistet. An der Torsionswelle 16 kann im motorischen Antriebsfall ein für sich bekannter - in den Zeichnungsfiguren nicht gezeigter - Antrieb zur Bewegung des Daches angreifen. Ein solcher Antrieb kann elektrisch, hydraulisch oder auf andere bekannte Art direkt oder indirekt - beispielsweise über ein Vorgelege - die erforderliche Antriebskraft auf die Torsionswelle 16 übertragen. Durch die Verwendung eines Vorgeleges kann bei Bedarf eine Übersetzung realisiert werden. Zudem ist ein Vorgelege bei großen erforderlich Drehwinkeln der Torsionswelle 16 von Vorteil. Durch die erfindungsgemäße Torsionswelle 16 ist man in der Wahl des Krafteinleitungspunktes in die Torsionswelle 16 flexibel: Es kann bevorzugt eine zentrale Krafteinleitung erfolgen, es ist jedoch auch eine dezentrale und im Extremfall einseitige Krafteinleitung möglich.

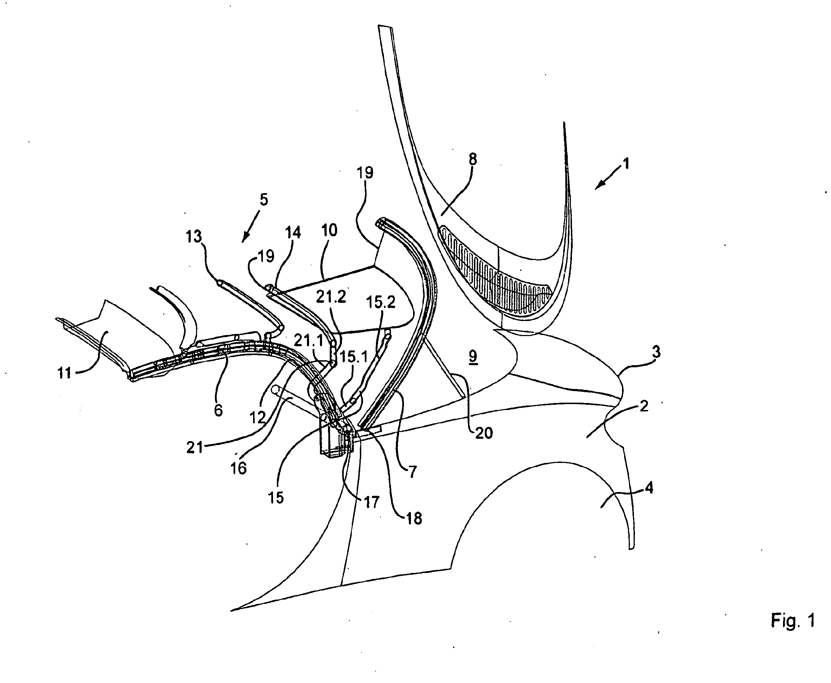

Um für Wartungs- und Montagezwecke bei ansonsten geschlossenem Dach den Motorraum erreichen zu können, soll der Haltebügel 7 in dem Ausführungsbeispiel nach den Fig. 1 bis 4 in die aus diesen Figuren jeweils skizzierte hochgestellte Wartungs- und Montagestellung hochgeschwenkt werden, in der der Haltebügel 7 durch eine Stange 20, die schwenkbeweglich an der Karosserie festgelegt ist, gehalten sein.

Um dies zu gewährleisten, ist auch die Heckscheibe 10 mit ihren Heckscheibengestängeteilen 15 mit zu verschwenken. Um dies für eine hinreichend große Montage- und Wartungsöffnung gewährleisten zu können, sind die Heckscheibengestängeteile zunächst jeweils zweiteilig ausgebildet und bestehen aus einem ersten Heckscheibengestängehebel 15.1, der einen drehfest mit der Torsionswelle ausgebildeten Fortsatz der Torsionswelle 16 bildet, und einem zweiten Heckscheibengestängehebel 15.2, der mit dem ersten Heckscheibengestängehebel 15.1 und der Heckscheibe 10 schwenkbar verbunden ist.

Der Eckspriegel 14 ist jeweils zu beiden Seiten über jeweils ein Eckspriegelgestängeteil 21 mit der Torsionswelle 16 verbunden. Auch dieses jeweilige Eckspriegelgestängeteil 21 ist ebenfalls zweiteilig ausgebildet und besteht aus einem dem Eckspriegel zugewandten oberen Eckspriegelgestängehebel 21.2 und einem unteren Eckspriegelgestängehebel 21.1. Auch diese sind wiederum schwenkbeweglich aneinander festgelegt, so dass der Eckspriegel 14 durch ein Verschwenken des Eckspriegelgestängehebels 21.2 relativ zum Eckspriegelgestängehebel 21.1 in eine relative Schwenkstellung gebracht werden kann, also in der zeichnerischen Darstellung nach Fig. 1 in eine in der Zeichnung links verrückte vordere Position, bei ansonsten unverändert geschlossenem Dach. Aufgrund dieser Ausbildung der Verdeckgestängeteile ist gewährleistet, dass diese Wartungs- und Montagestellung bei diesem Cabriolet-Fahrzeug eingenommen werden kann, und zwar ungehindert durch die vorgesehenen Heckscheibengestängeteile 15.

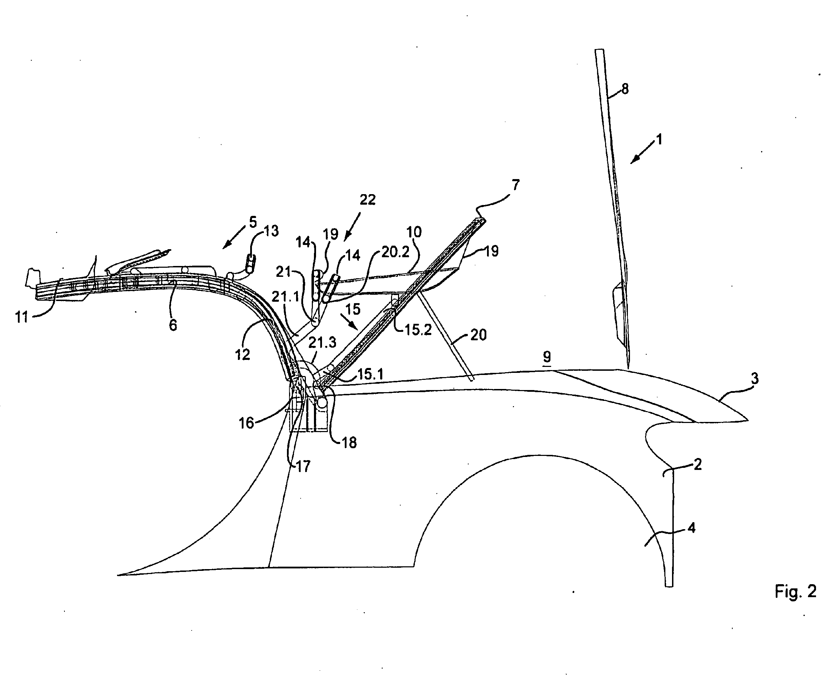

Die Darstellung nach Fig. 2 veranschaulicht noch näher die Ausbildung der Verdeckgestängeteile und zeigt, dass über einen Kulissenhebel 21.3 der Eckspriegelhebel 21.1 mit der Torsionswelle 16 verbunden ist. Durch den Pfeil 22 angedeutet, sind die beiden Stellungen des Eckspriegels 14 einmal in der geschlossenen Stellung des Haltebügels und einmal in der in Fig. 2 ersichtlichen Montagestellung des Haltebügels 7.

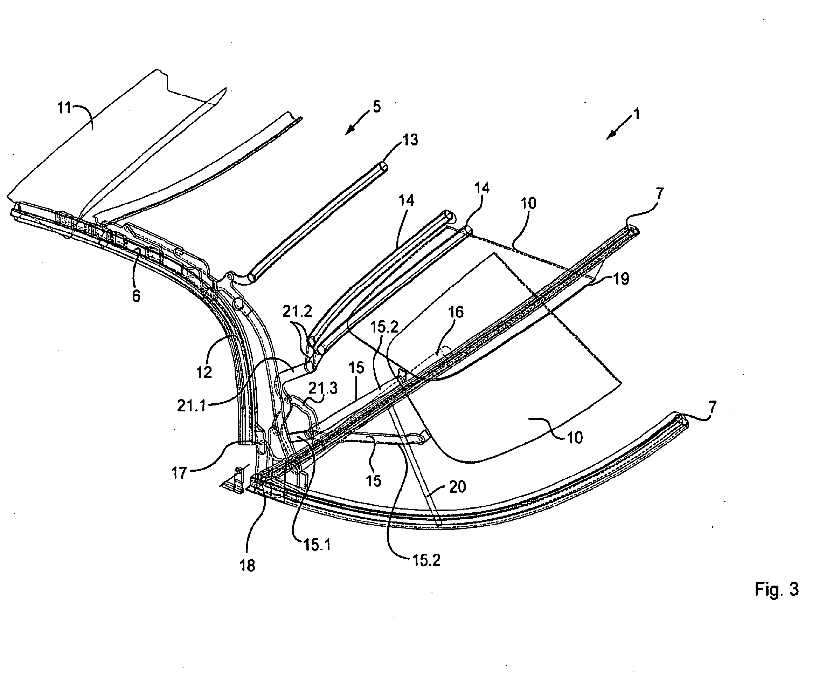

In Fig. 3 sind der Haltebügel 7 einmal in der hochgestellten Position und einmal in der Spannposition dargestellt. Dazu sind auch die Lagen der Heckscheibengestängeteile 15 und der Heckscheibe 10 für beide Positionen mit eingezeichnet. Gleiches gilt für die verschiedenen Positionen der Eckspriegel 14 und des zugehörigen Eckspriegelgestängehebels 21.2.

Es ist ersichtlich, dass der Eckspriegelgestängehebel 21.1, der an der Torsionswelle 16 angreift, sich in unveränderter Lage befindet. Gleiches gilt auch für den Verbindungshebel 21.3. Gleichwohl ist ein hinreichender Raum für Montage- und/oder Wartungsarbeiten geschaffen. Auch der untere Heckscheibengestängehebel 15.1 ist, wie aus Fig. 3 ersichtlich ist, nicht mit verschwenkt worden. Dies macht nur der Heckscheibengestängehebel 15.2 mit.

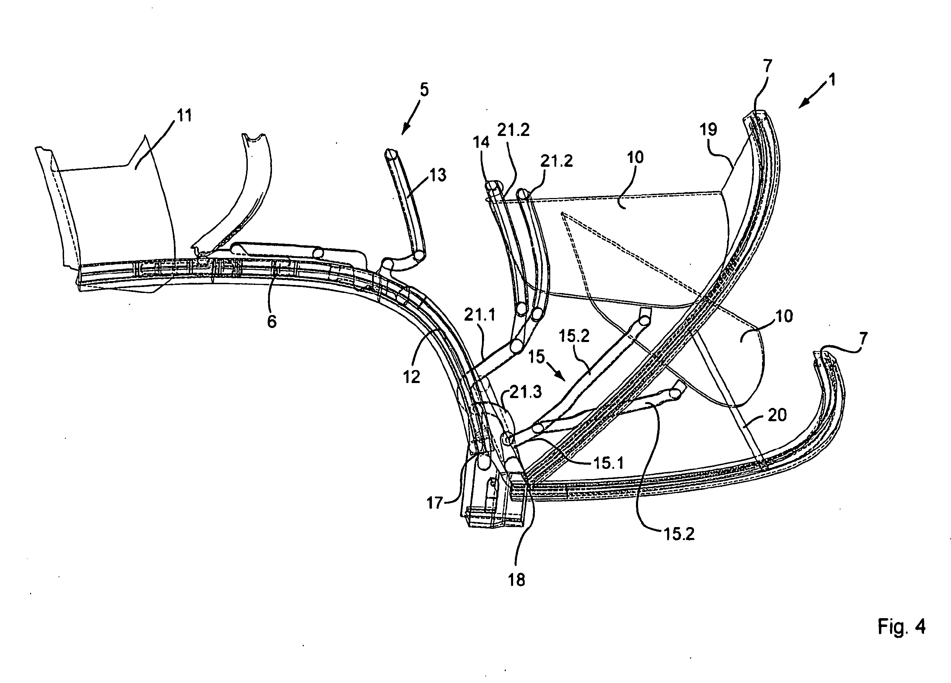

In der zu Fig. 3 analogen Darstellung nach Fig. 4, jedoch in Seitenansicht der Teile, ist dies in analoger Weise noch einmal dargestellt worden, wobei auch wiederum die jeweiligen unterschiedlichen Stellungen des Haltebügels 7, der Heckscheibe 10 und des Heckscheibengestängehebels 15.2 sowie des Eckspriegelgestängehebels 21.2 dargestellt sind.

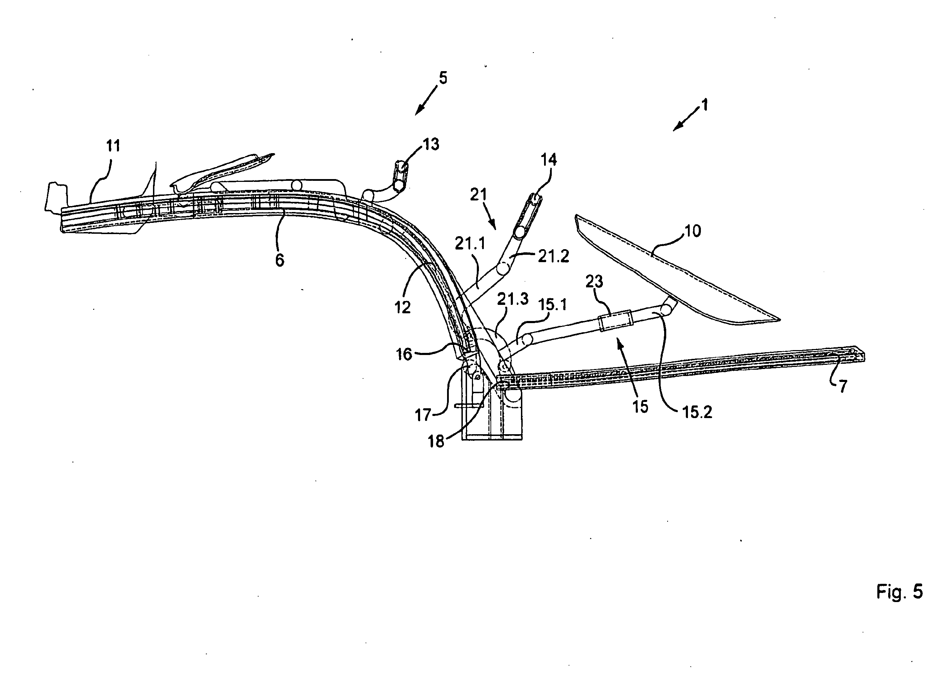

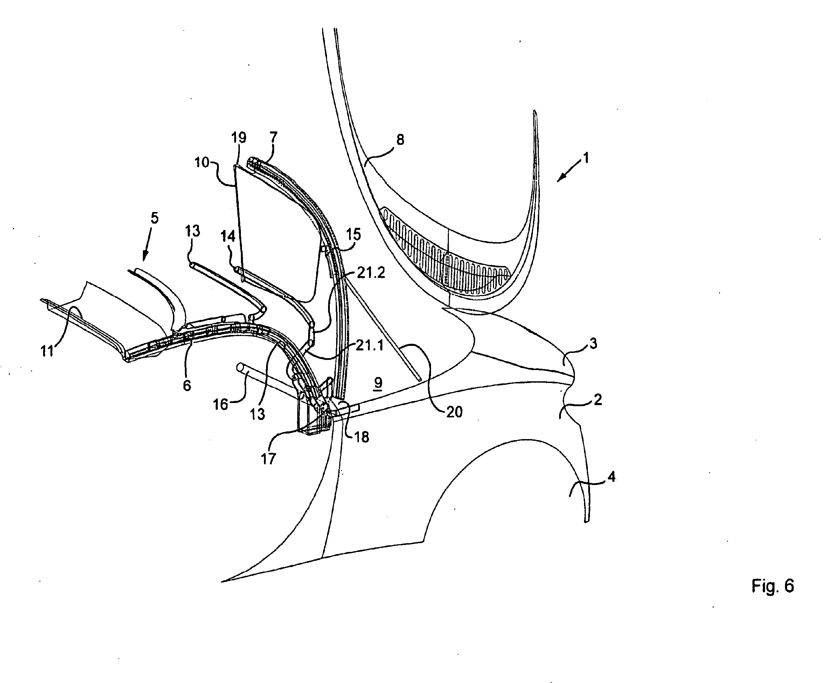

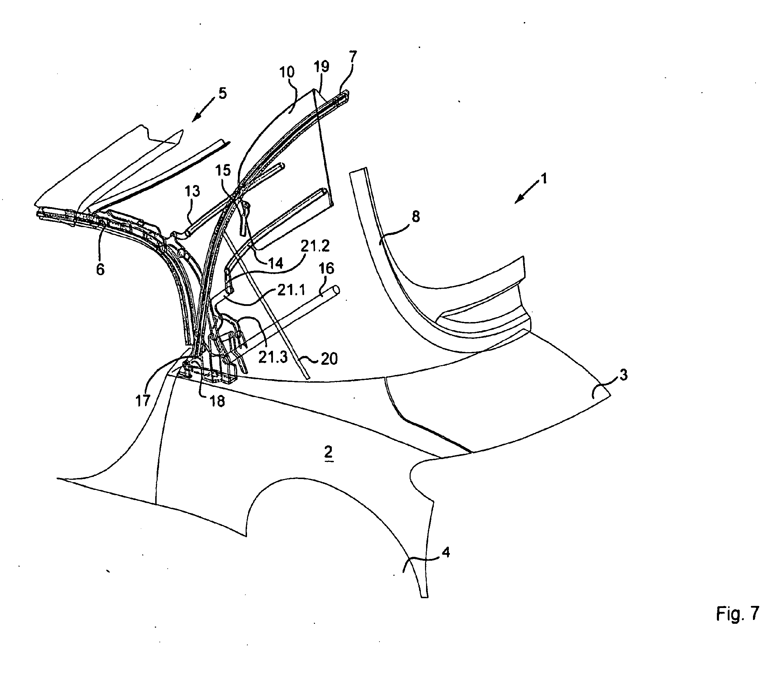

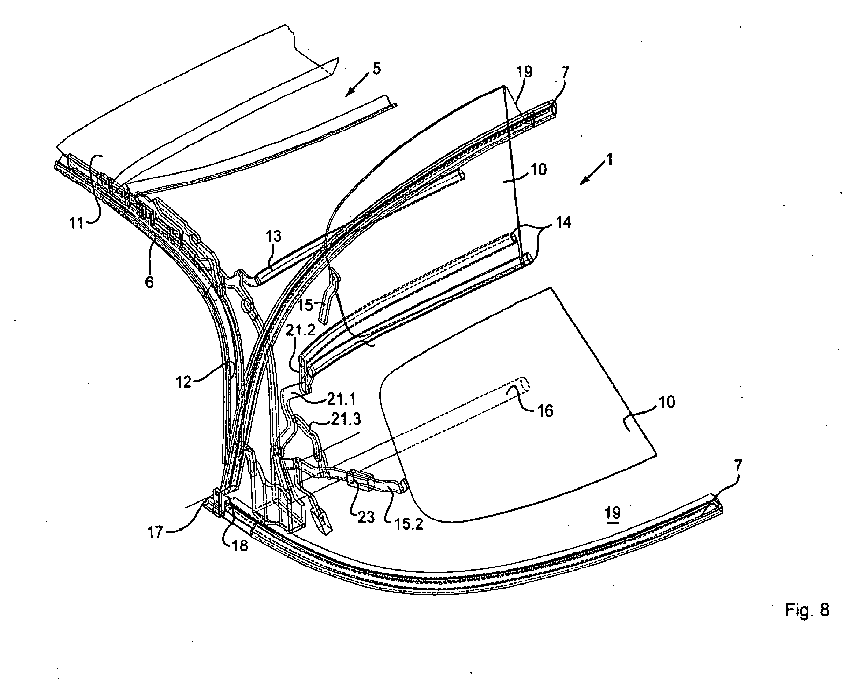

Bei ansonsten völlig analogem Aufbau ist in den Fig. 5 bis 8 ein zu dem Ausführungsbeispiel nach den Fig. 1 bis 4 ein alternatives Ausführungsbeispiel gezeigt, das bei ansonsten unveränderter Gestaltung des Cabriolet-Fahrzeuges sich insbesondere dadurch unterscheidet, dass hier ein Schieber 23 zur Längenveränderung des Heckscheibengestängeteils 15, nämlich zu Längenveränderung des Heckscheibengestängehebels 15.2 vorgesehen ist. Es ist ebenfalls möglich, den Heckscheibengestängehebel 15.2 teleskopartig aufzubauen, wobei der Schieber zum Verriegeln und Entriegeln genutzt werden kann. Ebenfalls ist es möglich, den Verdeckgestängehebel 15.2 zu unterteilen und trennbar auszubilden, wobei zur Einleitung eines Anhebens eines Haltebügels dieser z.B. zunächst zu entriegeln ist und danach ein Schieber oder sonstiger Feststeller zum Lösen der Verbindung innerhalb des Verdeckgestängehebels aktiviert wird. Eine derartige Längenveränderung des Heckscheibenverdeckgestängehebels 15.2 stellt eine wesentlich vergrößerte Montageöffnung zur Verfügung, wie dies besonders deutlich aus den Fig. 6 bis 8 zu ersehen ist. Hier ist der Haltebügel in eine nahezu aufrechte Wartungs- und Montageposition zu überführen und über die Sperrstange 20 zu arretieren. Diese Stellung kann selbst dann eingenommen werden, wenn an dieser Stelle im rückwärtigen Bereich des Fahrgastraumes ein üblicher Überrollbügel vorgesehen ist, da durch diese Ausbildung die Heckscheibe 10 in eine als vertikal ausgerichtete Überkopfstellung zu überführen ist. Ansonsten sind auch bei diesem Ausführungsbeispiel die Teile so ausgebildet, wie schon im Zusammenhang mit der Darstellung des Ausführungsbeispiels nach den Fig. 1 bis 4 erläutert.

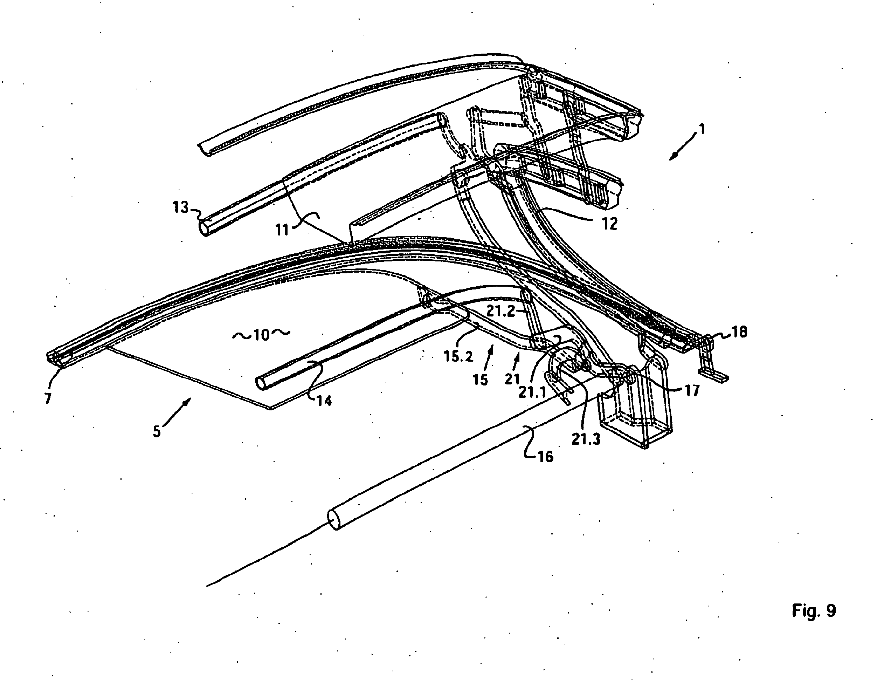

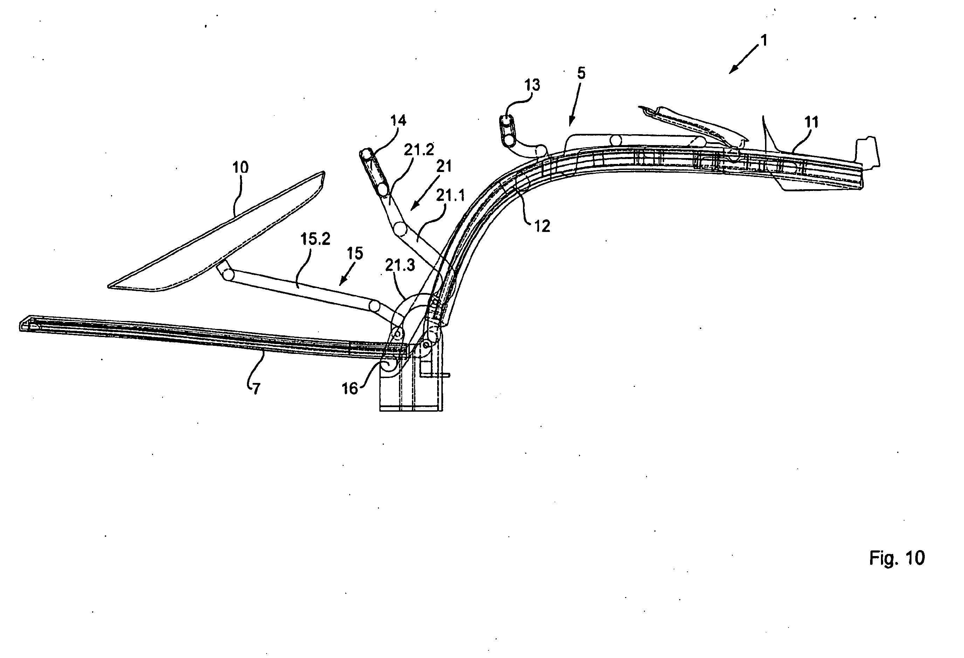

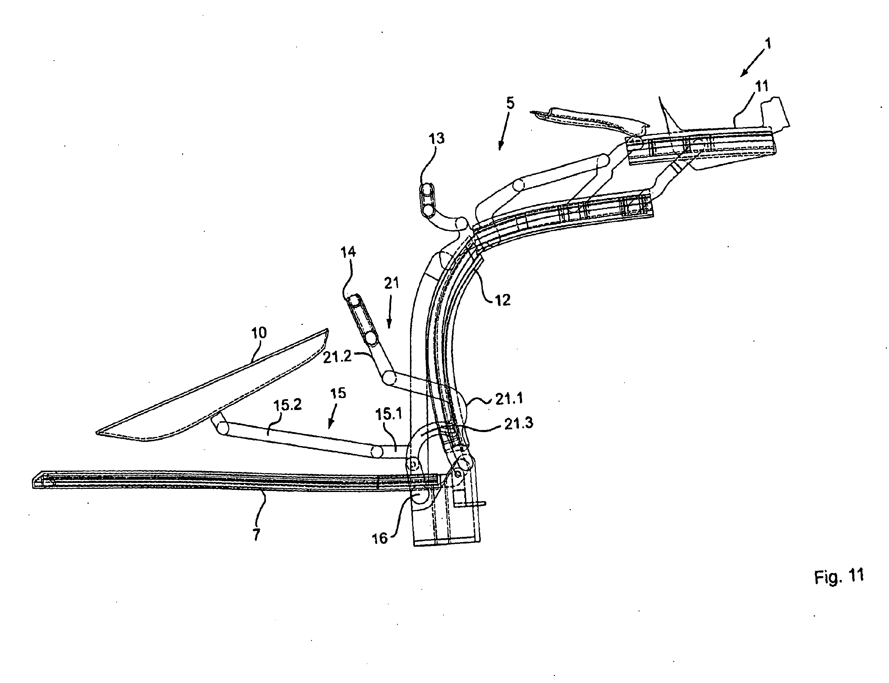

Figuren 9 und die Figuren 10 bis 14 veranschaulichen noch einmal deutlich den Öffnungsvorgang des Verdeckgestells und damit des Daches insgesamt über die zentrale Torsionswelle 16.

Bei dem veranschaulichten Cabriolet-Fahrzeug wird der Dachstoff (Dachbahn) 19 durch die Festlegung der Dachspitze 11 an einem Windschutzscheibenrahmen gespannt. Der Haltebügel 7 bleibt während des eigentlichen Verdeckbewegungsvorganges (Öffnen, Schließen) in seiner unveränderten an der Karosserie 3 anliegenden Position. Gleiches gilt für den sichelförmigen Deckel, der während der Dachbewegung geschlossen bleibt.

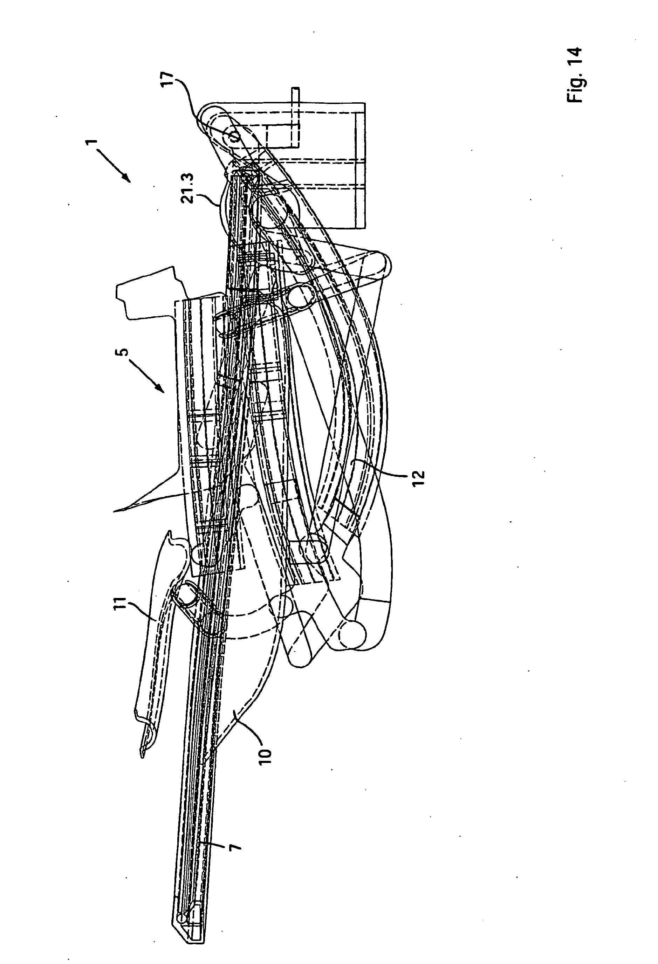

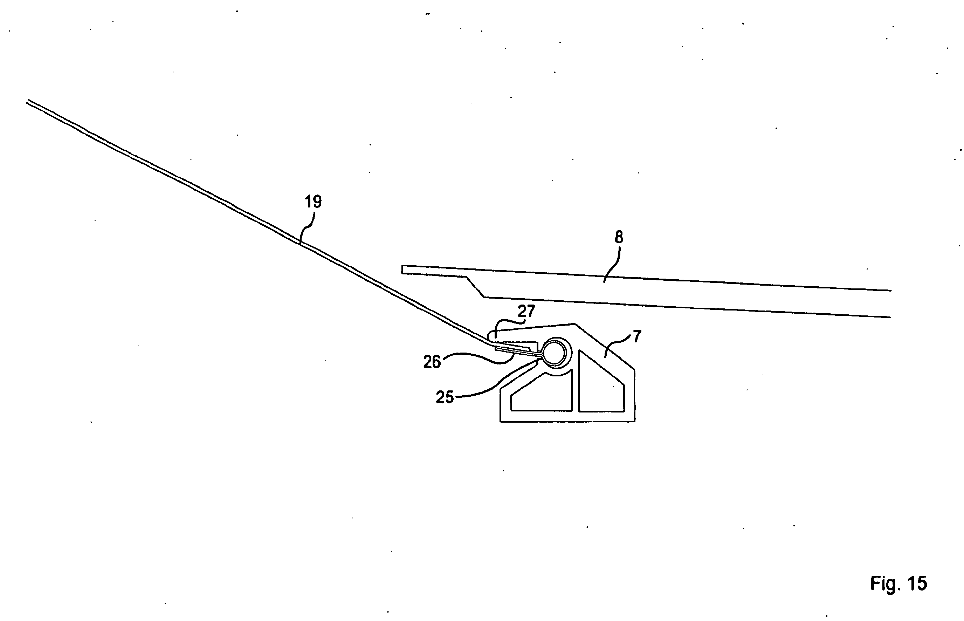

Wie in Fig. 15 näher veranschaulicht ist, erfolgt die Anbindung des Dachstoffes 19 an den Haltebügel 7 insbesondere deshalb, um mit dem Haltebügel 7 den hinteren Dachbereich in die angestrebte Wartungs- bzw. Montagestellung mit überführen zu können. Im abgelegten Zustand legt sich das gesamte Dachpaket - in einer Draufsicht betrachtet innerhalb des Haltebügels ab. Die abgelegte Stellung entspricht der Darstellung nach Fig. 14, wo das gesamte Dach Z-förmig zusammen abgelegt ist. Die Abdeckung des abgelegten Dachpaketes erfolgt dabei nicht mit einem Verdeckkastendeckel, sondern durch die in gleicher Orientierung abgelegte Dachspitze 11.

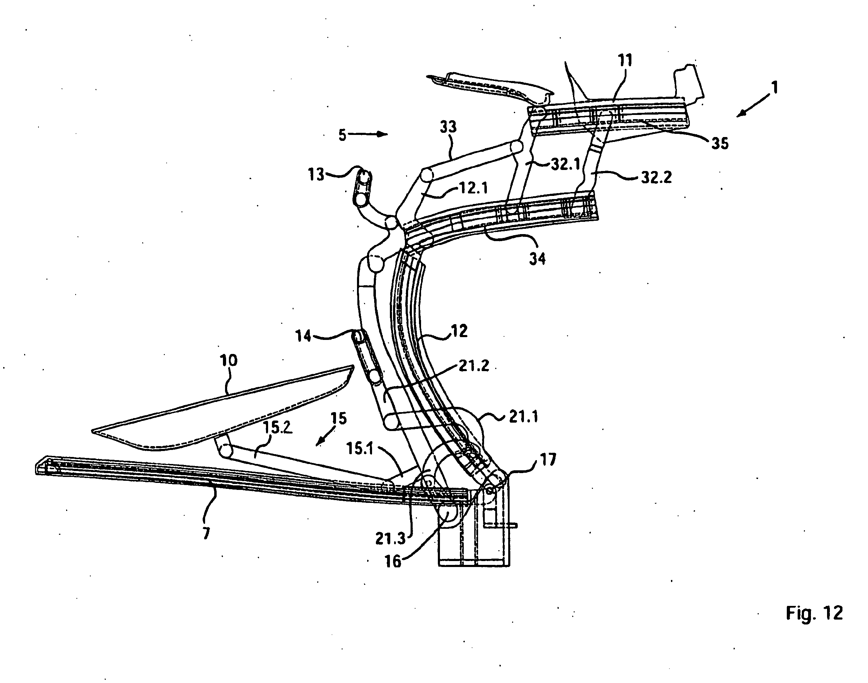

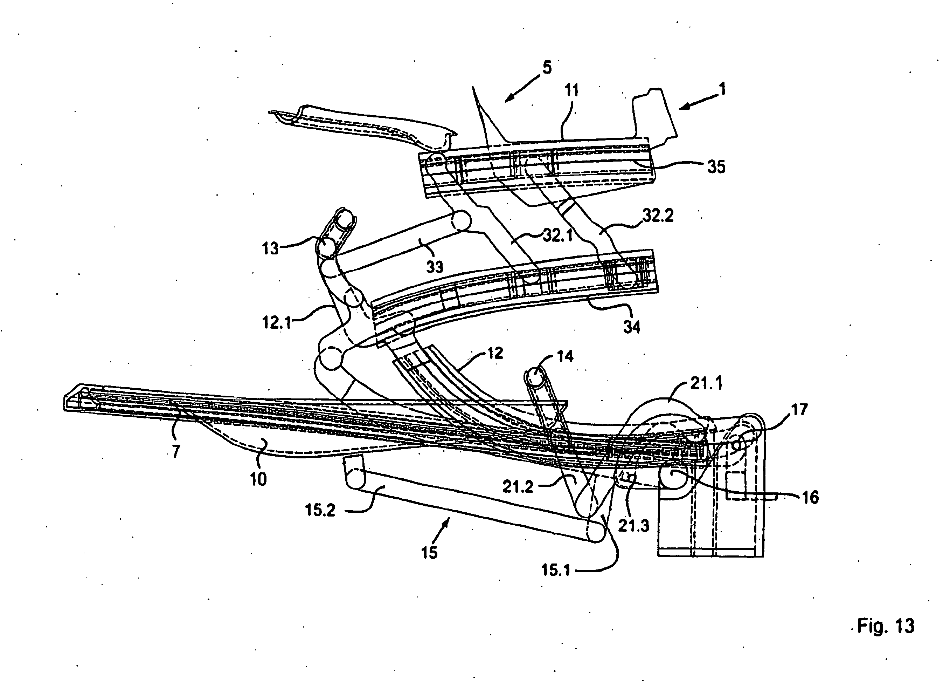

Wie aus den Figuren 12 und 13 erkennbar ist, ist das vordere Dachrahmenelement 35, welches die Dachspitze 11 trägt, über die beiden Parallelogrammlenker 32.1 und 32.2 am mittleren Dachrahmenelement 34 angebunden. Die Ansteuerung des Parallelogramms 32.1 und 32.2 erfolgt durch einen Steuerungslenker 33, der am einen Ende gelenkig mit dem obersten Ende 12.1 des seitlichen Lenkers 12 und am anderen Ende gelenkig am Parallelogrammlenker 32.1 angreift. Durch diese Steuerung des vorderen Dachrahmenelementes 35 wird dieses während eines Öffnungsvorganges des Daches 5 zwangsgesteuert parallel über das mittlere Dachrahmenelement 34 verlagert. Dieser Aspekt der erfindungsgemäßen parallelen Verlagerung des vorderen Dachrahmenelementes 35 während eines Öffnungsvorganges des Daches 5 ist auch unabhängig von einem Cabriolet-Fahrzeug 1 mit einer Zentralantriebseinheit 16 anwendbar.

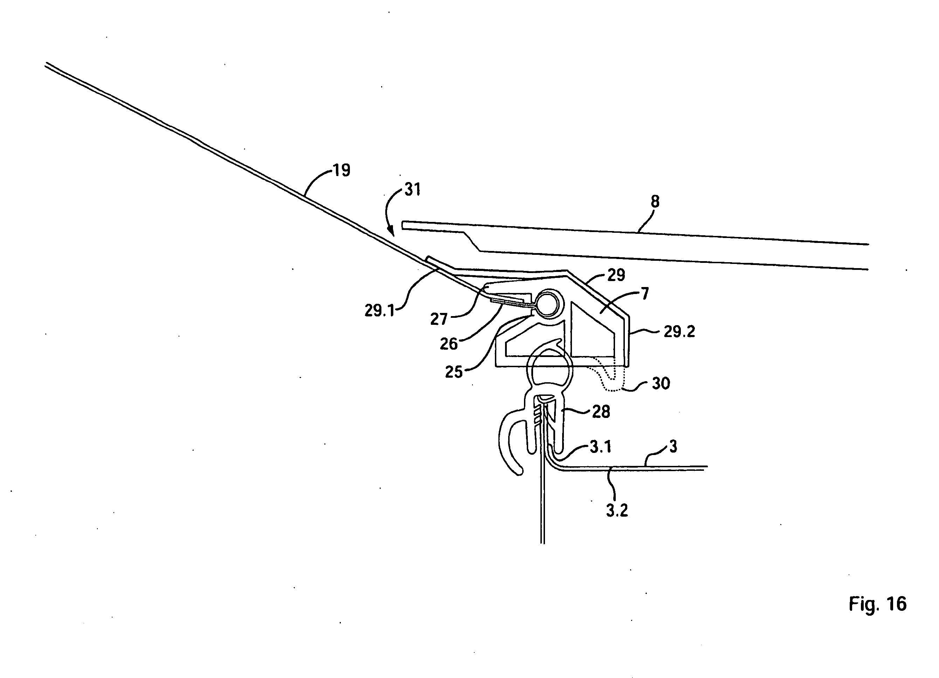

Wie näher aus Fig. 15 hervorgeht, ist innerhalb des Haltebügels 7 ein Aufnahmeraum 25 vorgesehen, in dem mittels eines angenähten Keders 26 der Dachstoff 19 festzulegen ist. Dabei ist der Dachstoff 19 derart über eine Ablaufkante 27, die an dem Haltebügel 7 angeformt ist, geführt, dass verschiedene Winkelstellungen des Verdeckstoffes 19 eingenommen werden können, und zwar Winkelstellungen relativ zum Haltebügel 7. Die Ablaufkante 27 weist im Kontaktbereich mit dem Verdeckstoff 19 bevorzugt eine abgerundete Kontur auf, um durch wiederholte Verdeckbewegungszyklen den Verdeckstoff 19 nicht zu beschädigen. Da sich das Verdeck in Offenstellung (in Draufsicht) innerhalb des Haltebügels 7 ablegt, muss dieser entsprechend große Abmaße aufweisen. Um dennoch den Verdeckstoff 19 entsprechend der gewünschte Winkellage aus der Karosserielinie austreten zu lassen ist dieser erfindungsgemäß an der Innenseite des Haltebügels 7 angebunden. Neben dem Vorteil der Ablaufkante 27, dass verschiedene Winkelstellungen des Verdeckstoffes 19 einstellbar sind, weist die erfindungsgemäße Kombination aus innerer Anbindung des Verdeckstoffes 19 und Ablaufkante 27 den großen Vorteil auf, dass keine Berührung der Karosserie durch den Verdeckstoff 19 erfolgt. Dies ist durch den Spalt 31 in Figur 16 angedeutet. Hieraus resultiert der Vorteil, dass die Abdeckung 8 konstruktiv so ausgelegt werden kann, dass sie keine (teils sehr hohen) Kräfte des gespannten Verdeckstoffs (19) aufnehmen muss.

Fig. 16 veranschaulicht ergänzend, wie der Haltebügel in seiner Normalstellung (außerhalb der Wartungs- und Montagestellung) an der Karosserie 3 anliegt. Dazu hat die Karosserie eine Anformung 3.1, auf die ein Dichtelement 28 aufgesetzt ist, an dem sich der Haltebügel 7 anlehnt. Der Haltebügel 7 ist daher von unten, d.h. von der Karosserie aus abgedichtet und in dieser Lage von einer nicht näher gezeigten Schließvorrichtung zu arretieren. Zu Dichtungszwecken kann ein zusätzliches flexibles Dichtelement 29 vorgesehen sein, das am einen Ende 29.1 mit dem Verdeckstoff 19 fest verbunden ist (zum Beispiel durch eine Klebeverbindung) und am anderen Ende 29.2 an der Außenseite des Haltebügels 7 festgelegt ist. Diese Festlegung kann ebenfalls durch eine Verklebung oder auch durch eine Clipsverbindung hergestellt werden. Das Dichtelement 29 besteht bevorzugt aus Verdeckstoffmaterial. Die Verbindung des Dichtelements 29 mit dem Verdeckstoff 19 erfolgt im Bereich 29.1 in einem Bereich, der von außen nicht sichtbar ist, da der Bereich 29.1 von der Abdeckung 8 übergriffen ist. Durch den Spalt 31 zwischen Verdeckstoff 19 und Abdeckung 8 kann im Falle von Regen oder in einer Waschanlage Wasser eindringen, das durch das Dichtungselement 29 um den Haltebügel 7 herum geleitet wird. Zusätzlich kann am unteren Ende des Haltebügels 7 eine Tropfkante 30 in Form eines Bügel-Profils vorgesehen sein. Im Bereich der Karosserie 3.2 kann sich dann der sogenannte Nassbereich mit einem Wasserkanal befinden, von wo aus das Wasser aus dem Fahrzeug herausgeleitet wird.

Die in den Figuren 15 und 16 dargelegten Aspekte der erfindungsgemäßen Verdeckstoffanbindung am Haltebügel 7 und der erfindungsgemäßen Dichtung des Haltebügels 7 gegenüber der Karosserie 3 sind auch unabhängig von einem Cabriolet-Fahrzeug 1 mit einer Zentralantriebseinheit 16 anwendbar.

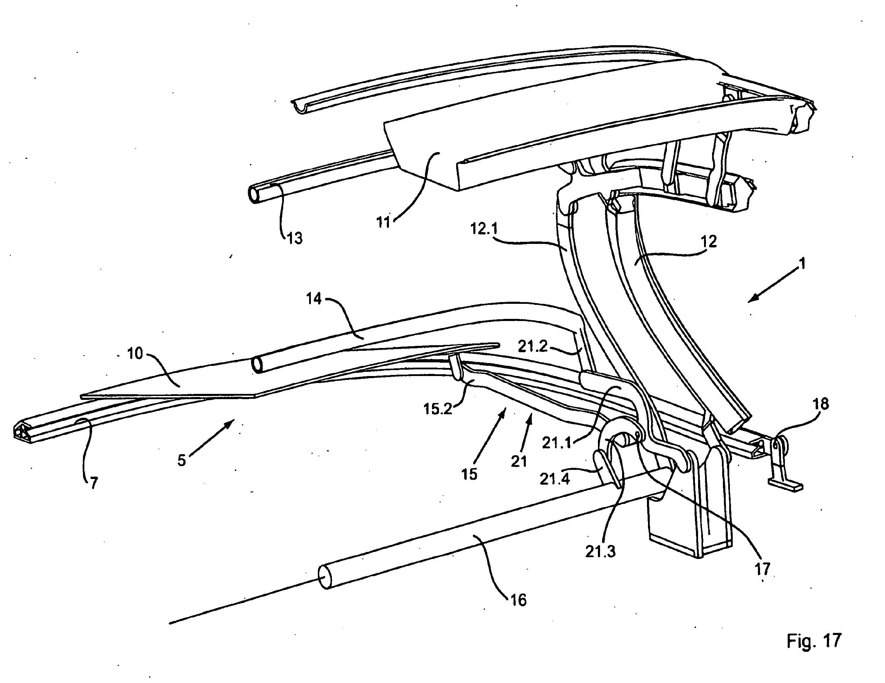

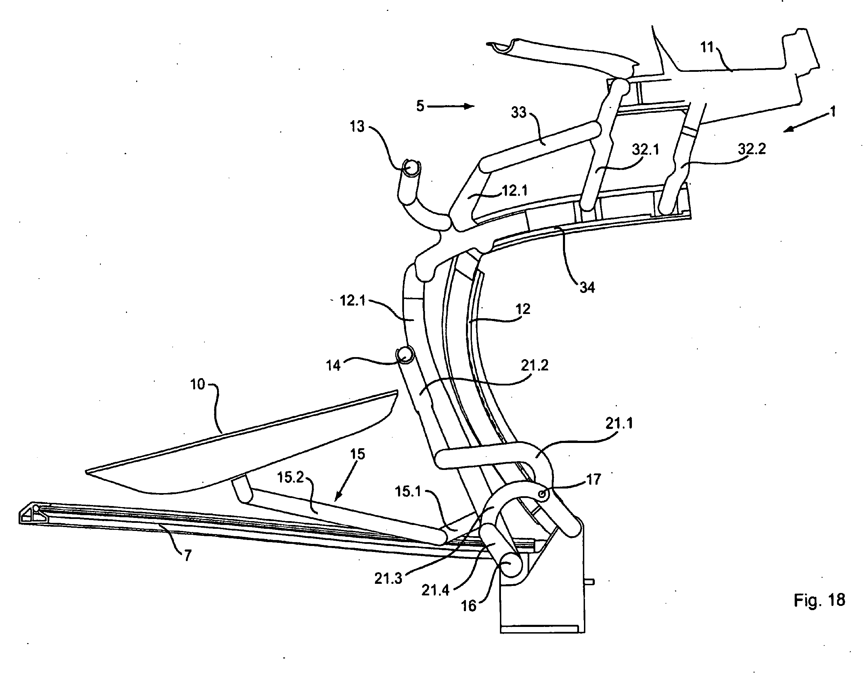

Wie im einzelnen näher aus den Figuren 17 und 18 hervorgeht, ist die Torsionswelle 16 unmittelbar und mithin starr zu beiden Seiten mit einer Hauptführungsstange 12.1 verbunden, an der wiederum starr der Heckscheibengestängehebel 15.1 angebunden ist. Über den Heckscheibengestängehebel15.1 wird ein Heckscheibengestängehebel 15.2 gelenkig angesteuert, der letzten Endes die Heckscheibe 10 gelenkig ansteuert. Die Torsionswelle 16 ist zudem unmittelbar und mithin starr an beiden äußeren Randbereichen mit einem Eckspriegelgestängehebel 21.4 verbunden, über das jeweils ein Eckspriegelgestängehebel (Steuerhebel) 21.3 gelenkig angesteuert wird. Über die weiteren Eckspriegelgestängehebel 21.1 und 21.2 ist der Eckspriegelgestängehebel 21.3 mit dem Eckspriegel 14 verbunden und steuert dessen Bewegung. Hierbei greift der Eckspriegelgestängehebel 21.3 im Drehpunkt 17 an dem Eckspriegelgestängehebel 21.1 an. Das jeweilige Eckspriegelgestängeteil 21 ist zweiteilig ausgebildet (oberer Eckspriegegestängehebel 21.2 und unterer Eckspriegelgestängehebel 21.1), die wiederum schwenkbeweglich aneinander festgelegt sind, so dass der Eckspriegel 14 durch ein Verschwenken des Eckspriegelgestängehebels 21.2 relativ zum Eckspriegelgestängehebel 21.1 in eine Stellung überführt werden kann bei ansonsten unverändert geschlossenem Dach. Der Eckspriegelgestängehebel 21.1 ist dabei Schwenkbeweglich an einem Hauptlager angebunden. Durch die unmittelbare und starre Verbindung zwischen Torsionswelle 16, dem Heckscheibengestängehebel 15.1, dem Eckspriegelgestängehebel 21.4 sowie der Hauptführungsstange 12.1 ist ohne Zwischenschaltung von irgendwelchen Getriebe- oder sonstigen Kraftübertragungsmitteln eine direkte Kraftkupplung zu beiden Seiten des Fahrzeuges ermöglicht.

## Patentansprüche

1. Cabriolet-Fahrzeug mit einem in seiner Schließstellung einen Fahrgastraum überspannenden und aus der Schließstellung in eine in einem rückwärtigen Fahrzeugbereich gelegene Ablagestellung überführbaren Dach (5), das an einem Verdeckgestängeteile sowie zumindest ein Antriebselement zur Bewegung des Daches aus seiner Schließstellung in die Ablagestellung und zurück umfassenden Verdeckgestell (6) festlegbar ist, wobei das Antriebselement eine das Cabriolet-Fahrzeug (1) quer durchsetzende, jeweils mit seitlichem verdeckgestängeteilen verbindbare Zentralantriebseinheit (16) umfasst,
**dadurch gekennzeichnet,**
**dass** die Zentralantriebseinheit als Torsionswelle (16) ausgebildet ist, an der ein für sich bekannter Antrieb zur Bewegung des Daches angreift und die unmittelbar und starr zu beiden Seiten mit einer Hauptführungsstange (12.1) verbunden ist, an der starr ein Heckscheibengestängehebel (15.1) angebunden ist, wobei über den Heckscheibengestängehebel (15.1) ein Heckscheibengestängehebel (15.2) gelenkig angesteuert wird, der eine Heckscheibe (10) gelenkig ansteuert.

2. Cabriolet-Fahrzeug nach Anspruch 1,
**dadurch gekennzeichnet, daß** der Antrieb ein zentrales Antriebsstellglied ist.

3. Cabriolet-Fahrzeug nach Anspruch 2,
**dadurch gekennzeichnet,**
**dass** das zentrale Antriebsstellglied einen motorischen Antrieb umfasst.

4. Cabriolet-Fahrzeug nach Anspruch 2,
**dadurch gekennzeichnet,**
**dass** das zentrale Antriebsstellglied ein manuell betätigbares Bedienstellglied bzw. Betätigungsglied umfasst.

5. Cabriolet-Fahrzeug nach Anspruch 4,
**dadurch gekennzeichnet,**
**dass** das Bedienstellglied als ein in den Fahrgastraum einschwenkbarer Schwenkhebel ausgebildet ist.

6. Cabriolet-Fahrzeug nach Anspruch 4 oder 5,
**dadurch gekennzeichnet,**
**dass** das Bedienstellglied aus einer im wesentlichen hochgestellten Vertikalstellung in eine im wesentlichen in den Fahrgastraum hineinragende Horizontalstellung verschwenkbar ist, wobei im Verlaufe der Schwenkbewegung das Dach (5) mit seinem Verdeckgestell (6) aufs der Schließstellung des Daches (5) in seine Ablagestellung und umgekehrt überführbar ist.

7. Cabriolet-Fahrzeug nach einem der Ansprüche 4 bis 6,
**dadurch gekennzeichnet,**
**dass** das Bedienstellglied aus einer im wesentlichen hochgestellten Vertikalstellung in eine im wesentlichen in den Fahrgastraum hineinragende Horizontalstellung verschwenkbar ist, wobei im Verlaufe der Schwenkbewegung das Dach mit seinem Verdeckgestell aus der Ablagestellung des Daches (5) in seine Schließstellung und umgekehrt überführbar ist.

8. Cabriolet-Fahrzeug nach einem der Ansprüche 4 bis 7,
**dadurch gekennzeichnet,**
**dass** das Bedienstellglied von einem Bewegungswandler entkoppelbar ist und unabhängig von der Bewegung des Verdeckgestells in eine Ruheposition überführbar ist.

9. Cabriolet-Fahrzeug nach einem der Ansprüche 4 bis 8,
**dadurch gekennzeichnet,**
**dass** das Bedienstellglied in seiner Ruhestellung in einem rückwärtigen Bereich des Fahrgastraumes in einer im wesentlichen Vertikalstellung gelegen ist.

10. Cabriolet-Fahrzeug nach einem der Ansprüche 8 bis 9,
**dadurch gekennzeichnet,**
**dass** der Bewegungswandler einen Haupthebel aufweist, der mit Verdeckgesängeteilen schwenkbeweglich und mit dem Bedienstellgied entkoppelbar verbindbar ist.

11. Cabriolet-Fahrzeug nach Anspruch 10,
**dadurch gekennzeichnet,**
**dass** der Bedienstellglied gegen die Kraft einer Feder von dem Haupthebel entkoppelbar ist.

12. Cabriolet-Fahrzeug nach einem der Ansprüche 4 bis 11,
**dadurch gekennzeichnet,**
**dass** das Bedienstellglied zwischen zwei Sitzen im Fahrgastraum angeordnet ist.

13. Cabriolet-Fahrzeug nach einem der Ansprüche 4 bis 12,
**dadurch gekennzeichnet,**
**dass** das Bedienstellglied neben einem Sitz innerhalb des Fahrgastraumes angeordnet ist.

14. Cabriolet-Fahrzeug nach einem der Ansprüche 4 bis 13,
**dadurch gekennzeichnet,**
**dass** das Bedienstellglied über einen Übertragungshebel an einem Gestängewinkelhebel angreift, der mit einem Gestängeteil des Verdeckes schwenkbar mechanisch koppelbar ist.

15. Cabriolet-Fahrzeug nach einem der Ansprüche 4 bis 14,
**dadurch gekennzeichnet,**
**dass** das Bedienstellglied in seiner Ruhestellung arretierbar ist.

16. Cabriolet-Fahrzeug nach Anspruch 4,
**dadurch gekennzeichnet,**
**dass** ein Hubstellmittel in Form eines von Hand hin- und herbewegbaren Betätigungshebels vorgesehen ist, dessen zumindest eine Hubbewegung in eine Richtung als Antriebsbewegung zum Schließen und /oder Öffnen des Daches (5) umwandelbar ist.

17. Cabriolet-Fahrzeug nach Anspruch 16,
**dadurch gekennzeichnet,**
**dass** der Betätigungshebel im wesentlichen U-förmig, T-förmig, I-förmig und/oder knopfförmig gestaltet ist.

18. Cabriolet-Fahrzeug nach einem der Ansprüche 16 bis 17,
**dadurch gekennzeichnet,**
**dass** das Dach über Mehrfachhübe des Hubstellmittels in seine Schließstellung und umgekehrt in seine Ablagestellung überführbar ist.

19. Cabriolet-Fahrzeug nach einem der Ansprüche 16 bis 18,
**dadurch gekennzeichnet,**
**dass** das Hubstellmittel ein Klinkensegment aufweist, das mit einem Zahnsegment zusammenwirkt.

20. Cabriolet-Fahrzeug nach Anspruch 19,
**dadurch gekennzeichnet,**
**dass** über das Hubstellmittel das Zahnsegment in verschiedene Bewegungsschwenkstellungen überführbar ist, in denen das Zahnsegment über ein Übertragungsglied Verdeckgestängeteile in unterschiedliche Schließ- und/oder öffnungsstellungen überführt.

21. Cabriolet-Fahrzeug nach Anspruch 20,
**dadurch gekennzeichnet,**
**dass** das Zahnsegment über einen Übertragshebel mit dem Verdeckgestell (6) verbindbar ist.

22. Cabriolet-Fahrzeug nach einem der Ansprüche 20 bis 21,
**dadurch gekennzeichnet,**
**dass** an dem Verdeckgestell (6) ein Kulissenstück festgelegt ist, in dessen Führungskulissen mit endseitigen Anschlägen das Übertragungsglied beweglich geführt ist.

23. Cabriolet-Fahrzeug nach einem der Ansprüche 16 bis 22,
**dadurch gekennzeichnet,**
**dass** das Hubstellmittel nur während seines Anhebens auf das Dach eine Schließantriebs- bzw. Ablageantriebsbewegung ausübt.

24. Cabriolet-Fahrzeug nach Anspruch 23,
**dadurch gekennzeichnet,**
**dass** das Hubstellmittel während eines Leerhubes antriebsbewegungsmäßig von dem Dach entkoppelbar ist und während der Entkoppelung das Dach (5) an einer Rückstellbewegung gehemmt list.

25. Cabriolet-Fahrzeu nach einem der Ansprüche 22 bis 24,
**dadurch gekennzeichnet,**
**dass** die Kulisse in dem Kulissenstück von ihrer Längserstreckung her auf einen Restweg des Daches beim Schließvorgang ausgelegt ist.

26. Cabriolet-Fahrzeug nach einem der Ansprüche 16 bis 25,
**dadurch gekennzeichnet,**
**dass** seitliche Lenker des Verdeckgestells (6) über die das Cabriolet-Fahrzeug (1) quer durchsetzende Torsionswelle (16) verbindbar sind, auf die zentral das Hubstellmittel hinsichtlich ihrer Antriebsbewegung einwirk

27. Cabriolet-Fahrzeug nach Anspruch 26,
**dadurch gekennzeichnet**
**dass** die Torsionswelle (16) drehbevegungsfest an dem Kulissenstück befestigbar ist.

28. Cabriolet-Fahrzeug nach einem der Ansprüche 16 bis 27,
**dadurch gekennzeichnet,**
**dass** das Hubstellmittel als bewegliches Fußpedal ausgebildet ist.

29. Cabriolet-Fahrzeug nach Anspruch 28,
**dadurch gekennzeichnet,**
**dass** das Fußpedal über einen Bowdenzug mit dem Verdeckgestell (6) verbindbar ist.

30. Cabriolet-Fahrzeug nach Anspruch 28 oder 29,
**dadurch gekennzeichnet,**
**dass** durch einen Hub des Fußpedals das Dach (5) aus seiner Ablagestellung in seine Schließstellung und umgekehrt überführbar ist.

31. Cabriolet-Fahrzeug nach einem der Ansprüche 16 bis 30,
**dadurch gekennzeichnet,**
**dass** das Hubstellmittel über ein Druckmedium mit einem Druckspeicher verbunden und mittels des Hubstellmittels ein Druck in dem Druckspeicher aufbaubar ist, wobei der Druckspeicher mit einem pneumatischen und/oder hydraulischen Stellglied zur Erteilung der Antriebsbewegung des Daches (5) verbindbar ist.

32. Cabriolet-Fahrzeug nach einem der Ansprüche 1 bis 31, mit zumindest einem Eck- (14) und Querspriegel (13),
**dadurch gekennzeichnet,**
**dass** die Heckscheibe (10) über Heckscheibengestängeteile (15) und Eckspriegel, (14) über Eckspriegelgestängeteile (21) mit der Torsionswelle (16) verbindbar sind, wobei sowohl die Heckscheibe (10) mit den Heckscheibengestängeteilten (15) als auch der Eckspriegel (14) über die Eckspriegelgestängeteile (21) relativ zu der in einer Ruhestellung befindlichen Torsionswelle (16) verschwenkbar und mit einem Haltebügel (7) in eine hochgeschwenkte Montage- oder Warturigsstellung überführbar sind.

33. Cabriolet-Fahrzeug nach Anspruch 32,
**dadurch gekennzeichnet,**
**dass** die Eckspriegelgestängeteile (21) relativ zu der Torsionswelle (16) verschwenkbar sind.

34. Cabriolet-Fahrzeug nach Anspruch 32 oder 33,
**dadurch gekennzeichnet,**
**dass** der Haltebügel (7) des Daches (5) und das Verdeckgestell (6) in separaten Lagerstellen (17,18) gelagert sind.

35. Cabriolet-Fahrzeug nach einem der Ansprüche 32 bis 34,
**dadurch gekennzeichnet,**
**dass** die Heckscheibe (10) und der Eckspriegel (14) über ihre jeweiligen Dachanbindungen von dem Haltebügel (7) in ihre Montage- oder Wartungsstellung überführbar sind.

36. Cabriolet-Fahrzeug nach einem der Ansprüche 32 bis 35,
**dadurch gekennzeichnet,**
**dass** der Haltebügel (7) in seiner Montage- oder Wartungsstellung über eine an der Karosserie (3) abstützbare Haltestange (20) arretierbar ist.

37. Cabriolet-Fahrzeug nach Anspruch 36,
**dadurch gekennzeichnet,**
**dass** die Haltestange (20) schwenkbar an der Karosserie (3) festgelegt ist.

38. Cabriolet-Fahrzeug nach einem der Ansprüche 32 bis 37,
**dadurch gekennzeichnet,**
**dass** die Eckspriegelgestängeteile (21) als jeweils zweiteilige Eckspriegelgestängehebel (21.1, 21.2) ausgebildet sind, wobei der dem Dach (5) zugewandte Eckspriegelgestängehebel (21.2) in der Schließstellung des Daches (5) relativ zu dem anderen in Schließrichtung des Daches (5) verschwenkbar ist.

39. Cabriolet-Fahrzeug nach einem der Ansprüche 32 bis 38,
**dadurch gekennzeichnet,**
**dass** die Heckscheibengestängeteile (15) als jeweils zweiteilige Heckscheibengestängehebel (15.1, 15.2) ausgebildet sind, wobei der der Heckscheibe (10) zugewandte Heckscheibengestängehebel (15.2) in der Schließstellung des Daches (5) relativ zum anderen Heckscheibengestängehebel (15.1) in Schließrichtung des Daches (5) verschwenkbar ist.

40. Cabriolet-Fahrzeug nach Anspruch 39,
**dadurch gekennzeichnet,**
**dass** der der Heckscheibe (10) abgewandte Heckscheibenverdeckgestängehebel (15.1) drehfest mit der Torsionswelle (16) verbindbar ist.

41. Cabriolet-Fahrzeug nach einem der Ansprüche 32 bis 40,
**dadurch gekennzeichnet,**
**dass** der Eckspriegelgestängehebel (21.1) an einem karosserieseitigen Lagerbock angelenkt ist und über einen Steuerhebel (21.3) mit der Torsionswelle (16) schwenkbar verbindbar sind.

42. Cabriolet-Fährzeug nach einem der Ansprüche 32 bis 41,
**dadurch gekennzeichnet,**
**dass** die Heckscheibengestängeteile (15) längenveränderlich ausgebildet sind.

43. Cabriolet-Fahrzeug nach einem der Ansprüche 32 bis 42,
**dadurch gekennzeichnet,**
**dass** die Heckscheibengestängeteile (15) als lösbar miteinander verbundene Teile ausgebildet sind.

44. Cabriolet-Fahrzeug nach einem der Ansprüche 32 bis 42,
**dadurch gekennzeichnet,**
**dass** die Heckscheibengestängeteile (15) zumindest bereichsweise teleskopartig ausgebildet sind.

45. nach einem der Ansprüche 32 bis 44,
**dadurch gekennzeichnet,**
**dass** der Haltebügel (7) in eine in etwa aufrechte Montage- oder Wartungsstellung überführbar ist, in der die Heckscheibe (10) in einer im wesentlichen aufrechte Über-Kopf-Stellung gelegen ist.

46. Cabriolet-Fahrzeug nach einem der Ansprüche 32 bis 45,
**dadurch gekennzeichnet,**
**dass** an dem Haltebügel (7) eine Abdichtung des Haltebügels (7) zur Fahrzeugkarosserie (3) hin über ein.Dichtelement (28) erfolgt, das an der Karosserie (3) befestigbar ist.

47. Cabriolet-Fahrzeug nach Anspruch 46,
**dadurch gekennzeichnet,**
**dass** an der Karosserie im Bereich der Auflage des Haltebügels (7) im geschlossenen Zustand des Daches (5) eine Anformung (3.1) vorgesehen ist, auf die das Dichtelement (28) aufsteckbar ist.

48. Cabriolet-Fahrzeug nach einem der Ansprüche 32 bis 47,
**dadurch gekennzeichnet,**
**dass** ein flexibler Dachbezug (19) an einem Haltebügel (7) festlegbar ist.

49. Cabriolet-Fahrzeug nach Anspruch 48,
**dadurch gekennzeichnet,**
**dass** der Dachbezug (19) mittels eines angenähten Keders in einer Ausformung (25) innerhalb des Haltebügels (7) festlegbar ist.

50. Cabriolet-Fahrzeug nach Anspruch 48 oder 49,
**dadurch gekennzeichnet,**
**dass** der Dachbezug (19) über eine dem Dach (5) zugewandte Ablaufführüngskante (27) geführt ist.

51. Cabriolet-Fahrzeug nach Anspruch 50,
**dadurch gekennzeichnet,**
**dass** der Dachbezug (19) von der Ablaufführungskante (27) unmittelbar zum Dach (5) geführt ist und hierbei keine weiteren Karosserieteile berührt.

52. Cabriolet-Fahrzeug nach einem der Ansprüche 48 bis 51,
**dadurch gekennzeichnet,**
**dass** der Dachbezug (19) an einer Innenseite des Haltebügels (7) festlegbar ist.

53. Cabriolet-Fahrzeug nach einem der Ansprüche 32 bis 52,
**dadurch gekennzeichnet,**
**dass** der Haltebügel (7) im geschlossenen Zustand des Daches (5) unterhalb einer zu öffnenden Karosserieabdeckung (8) in Form eines Deckels gelegen ist.

54. Cabriolet-Fahrzeug nach Anspruch 53,
**dadurch gekennzeichnet,**
**dass** der (7) in dieser Stellung von einer lösbaren Arretierung festlegbar ist.

55. Cabriolet-Fahrzeug nach einem der vorangehenden Ansprüche,
**dadurch gekennzeichnet,**
**dass** ein vorderes Dachrahmenelement (35) durch Parallelogrammlenker (32.1, 32.2) in Bezug auf ein mittleres Dachrahmenelement (34) parallel verlagerbar ist, wobei die Parallelogrammlenker (32.1, 32.2) am einen Ende mit dem vorderen Dachrahmenelement (35) und am anderen Ende mit dem mittleren Dachrahmenelement (34) gelenkig verbunden sind, wobei eine Ansteuerung der Parallelogrammlenker (32.1, 32.2) durch einen Steuerungslenker (33) erfolgt, der am einen Ende gelenkig mit einem oberen Ende (12.1) des seitlichen Lenkers (12) und am anderen Ende gelenkig am Parallelogrammlenker (32.1) angreift und wobei sich das obere Ende (12.1) des seitlichen Lenkers (12) in einer Zwischenposition des Daches (5) oberhalb des mittleren Dachrahmens (34) befindet.

## Claims

1. A convertible car with a roof (5) spanning the passenger compartment in its closed position and being convertible to a deposited position in a rearward vehicle portion, said roof being fixable to a convertible top frame (6) comprising convertible top bar members as well as at least one driving element for moving the roof from its closed position into the deposited position and vice versa, wherein the driving element comprises a central drive unit (16) that laterally crosses the convertible car (1) and that is respectively connectable to lateral convertible top bar members,
**characterized in that**
the central drive unit is formed as a torsional shaft (16) on which torsional shaft a per se known drive for moving the roof is acting, and which torsional shaft, on both sides, is directly and fixedly connected to a main guiding rod (12.1) to which a rear window bar lever (15.1) is fixedly connected, wherein a rear window bar lever (15.2) that jointed actuates a rear window (10) is jointed actuated via the rear window bar lever (15.1).

2. A convertible car according to claim 1, **characterized in that** the drive is a central drive actuator.

3. A convertible car according to claim 2, **characterized in that** the central drive actuator comprises a motor drive.

4. A convertible car according to claim 2, **characterized in that** the central drive actuator comprises a manually operable operation actuator or actuating member.

5. A convertible car according to claim 4, **characterized in that** the operation actuator is formed as a pivoted lever that is pivotable into the passenger compartment.

6. A convertible car according to claims 4 or 5, **characterized in that** the operation actuator is pivotable from a substantially elevated vertical position to a horizontal position substantially protruding into the passenger compartment, the roof (5) with its convertible top frame (6) being convertible from the closed position of the roof (5) into its deposited position and vice versa.

7. A convertible car according to one of the claims 4 to 6, **characterized in that** the operation actuator is pivotable from a substantially elevated vertical position to a horizontal position substantially protruding into the passenger compartment, wherein, in the course of the pivoting movement, the roof with its convertible top frame can be converted from the deposited position of the roof (5) to its closed position and vice versa.

8. A convertible car according to one of the claims 4 to 7, **characterized in that** the operation actuator can be uncoupled from a motion converter and can be converted to a resting position independently of the movement of the convertible top frame.

9. A convertible car according to one of the claims 4 to 8, **characterized in that** in its resting position, the operation actuator is arranged substantially in a vertical position in a rear portion of the passenger compartment.

10. A convertible car according to one of the claims 8 to 9, **characterized in that** the motion converter is provided with a main lever that can be pivotably connected to the convertible top bar members and can be detachably connected to the operation actuator.

11. A convertible car according to claim 10, **characterized in that** the operation actuator can be uncoupled from the main lever against the force of a spring.

12. A convertible car according to one of the claims 4 to 11, **characterized in that** the operation actuator is arranged between two seats in the passenger compartment.

13. A convertible car according to one of the claims 4 to 12, **characterized in that** the operation actuator is arranged next to a seat within the passenger compartment.

14. A convertible car according to one of the claims 4 to 13, **characterized in that** the operation actuator acts on a bar angle lever via a transmission lever, said bar angle lever being pivotably mechanically coupleable to a bar member of the convertible top.

15. A convertible car according to one of the claims 4 to 14, **characterized in that** the operation actuator is lockable in its resting position.

16. A convertible car according to claim 4, **characterized in that** a lifting actuator in the form of a operating lever that can be moved back and forth is provided, wherein the at least one lifting movement of the operating lever in one direction is convertible to a drive movement for closing and/or opening the roof (5).

17. A convertible car according to claim 16, **characterized in that** the operation lever is substantially U-shaped, T-shaped, I-shaped and/or button-shaped.

18. A convertible car according to one of the claims 16 to 17 **characterized in that** the roof is convertible to its closed position and, vice versa, to its deposited position via multiple lifts of the lifting actuator.

19. A convertible car according to one of the claims 16 to 18, **characterized in that** the lifting actuator is provided with a catch segment that co-operates with a tooth segment.

20. A convertible car according to claim 19, **characterized in that** the tooth segment can be converted to different pivoting movement positions via the lifting actuator, in which pivoting movement positions the tooth segment converts convertible top bar members in different closed and/or opened positions via a transmission member.

21. A convertible car according to claim 20, **characterized in that** the tooth segment can be connected to the convertible top frame (6) via a transmission lever.

22. A convertible car according to one of the claims 20 to 21, **characterized in that** a gate member is fixed to the convertible top frame (6), the transmission member being movably guided in the guiding gates of the gate member, which guiding gates are provided with end-side limit stops.

23. A convertible car according to one of the claims 16 to 22, **characterized in that** the lifting actuator only exerts a closing drive movement and deposition drive movement, respectively, on the roof while being lifted.

24. A convertible car according to claim 23, **characterized in that,** during non-load lifting, the lifting actuator can be drive-movement-wise uncoupled from the roof and is blocked at a reset movement during the uncoupling of the roof (5).

25. A convertible car according to one of the claims 22 to 24, **characterized in that** the gate in the gate member is designed for a remaining path of the roof during the closing operation with regard to its longitudinal extension.

26. A convertible car according to one of the claims 16 to 25, **characterized in that** lateral guides of the convertible top frame (6) can be connected via the torsional shaft (16) that is transversely crossing the convertible car (1), on which torsional shaft the lifting actuator is acting centrally with regard to its drive movement.

27. A convertible car according to claim 26 **characterized in that** the torsional shaft (16) can be rotationally fixedly attached to the gate member.

28. A convertible car according to one of the claims 16 to 27, **characterized in that** the lifting actuator is formed as a movable foot pedal.

29. A convertible car according to claim 28, **characterized in that** the foot pedal can be connected to the convertible top frame (6) via a Bowden cable.

30. A convertible car according to claim 28 or 29, **characterized in that** the roof (5) can be converted from its deposited position to its closed position and vice versa, via a Hub of the foot pedal.

31. A convertible car according to one of the claims 16 to 30, **characterized in that** the lifting actuator is connected to a pressure reservoir via a pressure medium, and that a pressure can be built up in the pressure reservoir via the lifting actuator, the pressure reservoir being connected to a pneumatic and/or hydraulic actuator for imparting the drive movement of the roof (5).

32. A convertible car according to one of the claims 1 to 31, comprising at least one corner roof bow (14) and cross roof bow (13), **characterized in that** the rear window (10) can be connected to the torsional shaft (16) via rear window bar members (15), and corner roof bows (14) can be connected to the torsional shaft (16) via corner roof bow bar members (21), wherein both, the rear window (10) with the rear window bar members (15) and the corner roof bow (14), can be pivoted relatively to the torsional shaft (16) in its resting position via the corner roof bow bar members (21) and can be converted to an upwardly pivoted assembling- or maintenance position with a retainer (7).

33. A convertible car according to claim 32, **characterized in that** the corner roof bow bar members (21) can be pivoted relatively to the torsional shaft (16).

34. A convertible car according to claim 32 or 33, **characterized in that** the retainer (7) of the roof (5) and the convertible top frame (6) are supported in separate bearing positions (17, 18).

35. A convertible car according to one of the claims 32 to 34, **characterized in that** the rear window (10) and the corner roof bow (14) can be converted to their assembling- or maintenance position via their respective roof connections by the retainer (7).

36. A convertible car according to one of the claims 32 to 35, **characterized in that** the retainer (7) can be locked in its assembling- or maintenance position via a supporting bar (20) that is supportable on the car body (3).

37. A convertible car according to claim 36, **characterized in that** the supporting bar (20) is pivotably fixed to the car body (3).

38. A convertible car according to one of the claims 32 to 37, **characterized in that** the corner roof bow bar members (21) are each formed as two-piece corner roof bow bar levers (21.1, 21.2), the corner roof bow bar lever (21.2) facing the roof (5) being pivotable in the closing direction of the roof (5) relatively to the other corner roof bow bar member when the roof (5) is in the closed position.

39. A convertible car according to one of the claims 32 to 38, **characterized in that** the rear window bar members (15) are each formed as two-piece rear window bar levers (15.1, 15.2), the rear window bar lever (15.2) facing the rear window (10) being pivotable in the closing direction of the roof (5) relatively to the other rear window bar lever (15.1) when the roof (5) is in the closed position.

40. A convertible car according to claim 39, **characterized in that** the rear window bar lever (15.1) far from the rear window (10) can be rotationally fixedly connected to the torsional shaft (16).

41. A convertible car according to one of the claims 32 to 40, **characterized in that** the corner roof bow bar lever (21.1) is hinged to a body-side bearing block and can be pivotably connected to the torsional shaft (16) via a control lever (21.3).

42. A convertible car according to one of the claims 32 to 41, **characterized in that** the rear window bar members (15) are formed such that their length can be changed.

43. A convertible car according to one of the claims 32 to 42, **characterized in that** the rear window bar members (15) are formed as parts that are detachably connected to each other.

44. A convertible car according to one of the claims 32 to 42, **characterized in that** the rear window bar members (15) are at least partially formed telescopical.

45. A convertible car according to one of the claims 32 to 44, **characterized in that** the retainer (7) can be converted to an approximately upright assembling- or maintenance position, in which position the rear window (10) is arranged in a substantially overhead position.

46. A convertible car according to one of the claims 32 to 45, **characterized in that,** at the retainer (7), sealing of the retainer (7) towards the vehicle body (3) is carried out via a sealing element (28) that is mountable to the vehicle body (3).

47. A convertible car according to claim 46, **characterized in that** a formed profile (3.1) is provided on the car body in the area of the rest of the retainer (7) in the closed state of the roof, to which formed profile the sealing element (28) can be attached.

48. A convertible car according to one of the claims 32 to 47, **characterized in that** a flexible roof cover (19) is fixable to a retainer (7).

49. A convertible car according to claim 48, **characterized in that** the roof cover (19) is fixable to a profile cavity (25) within the retainer (7) via an attached rand (26).

50. A convertible car according to claim 48 or 49, **characterized in that** the roof cover (19) is guided via a drainage guiding edge (27) facing the roof (5).

51. A convertible car according to claim 50, **characterized in that** the roof cover (19) is guided by the drainage (27) directly to the roof (5) without contacting any further body parts.

52. A convertible car according to one of the claims 48 to 51, **characterized in that** the roof cover (19) is fixable to an inner side of the retainer (7).

53. A convertible car according to one of the claims 32 to 52, **characterized in that,** in the closed state of the roof (5), the retainer (7) is arranged below a body covering (8) to be opened, which covering has the form of a cap.

54. A convertible car according to claim 53, **characterized in that** the retainer (7) is fixable in this position by a detachable locking device.

55. A convertible car according to one of the preceding claims, **characterized in that** a front roof frame element (35) is parallel displaceable by parallelogram guide (32.1, 32.2) with regard to a central roof frame element (34), the parallelogram guide (32.1, 32.2) being jointedly connected to the front roof frame element (35) with their one ends, and being jointedly connected to the central roof frame element (34) with their other ends, an activation of the parallelogram guide (32.1, 32.2) being effected by a control guide (33) that is jointedly connected to an upper end (12.1) of the lateral guide (12) with its one end, and, with its other end, jointedly acts on the parallelogram guide (32.1), and wherein the upper end (12.1) of the lateral guide (12) is arranged at an intermediate position of the roof (5) above the central roof frame (34).

## Revendications

1. Véhicule cabriolet avec un toit (5) couvrant un habitacle dans sa position de fermeture et déplaçable de la position de fermeture dans une position de rangement située à l'arrière du véhicule, qui peut être fixé sur un châssis de capote (6) comprenant des tringleries de capote ainsi que au moins un élément d'entraînement pour le déplacement du toit à partir de sa position de fermeture dans la position de rangement et inversement, l'élément d'entraînement comportant une unité d'entraînement centrale (16) qui traverse perpendiculairement le véhicule cabriolet (1) et peut respectivement être fixée avec une tringlerie latérale de capote,
**caractérisé en ce**
**que** l'unité d'entraînement central est conçue comme un axe de torsion (16) sur lequel entre en prise un entraînement connu en soi pour le déplacement du toit et qui est fixée directement et rigidement de part et d'autre d'une tige de guidage principale (12.1) à laquelle est fixé rigidement un levier de tringlerie de lunette arrière (15.1), un levier de tringlerie de la lunette arrière (15.2) qui commande de manière articulée une lunette arrière (10) étant commandé de manière articulée par l'intermédiaire du levier de tringlerie de la lunette arrière (15.1).

2. Véhicule cabriolet selon la revendication 1,
**caractérisé en ce que** l'entraînement est un actionneur d'entraînement central.

3. Véhicule cabriolet selon la revendication 2,
**caractérisé en ce que** l'actionneur d'entraînement central comprend un entraînement à moteur.

4. Véhicule cabriolet selon la revendication 2,
**caractérisé en ce que** l'actionneur d'entraînement central comprend un actionneur de commande ou un organe d'actionnement à commande manuelle.

5. Véhicule cabriolet selon la revendication 4,
**caractérisé en ce que** l'actionneur de commande est conçu comme un levier oscillant pivotant dans l'habitacle.

6. Véhicule cabriolet selon l'une des revendications 4 ou 5,
**caractérisé en ce que** l'actionneur de commande peut pivoter d'une position verticale essentiellement relevée dans une position horizontale débordant essentiellement dans l'habitacle du véhicule, le toit (5) pouvant être déplacé avec son châssis de capote (6) de la position de fermeture du toit (5) dans sa position de rangement et inversement au cours du mouvement pivotant.

7. Véhicule cabriolet selon l'une des revendications 4 à 6,
**caractérisé en ce que** l'actionneur de commande peut pivoter d'une position verticale essentiellement relevée dans une position horizontale débordant essentiellement dans l'habitacle du véhicule, le toit pouvant être déplacé avec son châssis de capote de la position de rangement du toit (5) dans sa position de fermeture et inversement au cours du mouvement pivotant.

8. Véhicule cabriolet selon l'une des revendications 4 à 7,
**caractérisé en ce que** l'actionneur de commande peut être désaccouplé par un convertisseur de mouvement et, indépendamment du mouvement du châssis de la capote, peut être amené dans une position de repos.

9. Véhicule cabriolet selon l'une des revendications 4 à 8,
**caractérisé en ce que** l'actionneur de commande est situé dans sa position de repos à l'arrière de l'habitacle du véhicule dans une position essentiellement verticale.

10. Véhicule cabriolet selon l'une des revendications 8 à 9,
**caractérisé en ce que** le convertisseur de mouvement présente un levier principal qui peut être mobile à pivotement avec des tringleries de capote et fixé de manière à pouvoir être désaccouplé avec le levier de commande.

11. Véhicule cabriolet selon la revendication 10,
**caractérisé en ce que** le levier de commande peut être désaccouplé contre la force d'un ressort du levier principal.

12. Véhicule cabriolet selon l'une des revendications 4 à 11,
**caractérisé en ce que** l'actionneur de commandes est disposé entre deux sièges dans l'habitacle du véhicule.

13. Véhicule cabriolet selon l'une des revendications 4 à 12
**caractérisé en ce que** l'actionneur de commande est disposé à côté d'un siège à l'intérieur de l'habitacle du véhicule.

14. Véhicule cabriolet selon l'une des revendications 4 à 13,
**caractérisé en ce que** l'actionneur de commande entre en prise par l'intermédiaire d'un levier de transmission sur un levier de la tringlerie qui peut être couplé mécaniquement à pivotement avec une partie de la tringlerie de la capote.

15. Véhicule cabriolet selon l'une des revendications 4 à 14,
**caractérisé en ce que** l'actionneur de commande peut être bloqué dans sa position de repos.

16. Véhicule cabriolet selon la revendication 4,
**caractérisé en ce qu'**un dispositif de levage est prévu sous la forme d'un levier d'actionnement déplaçable d'avant en arrière à la main dont au moins un mouvement de levage peut être converti dans une direction comme mouvement d'entraînement pour la fermeture et/ou l'ouverture du toit (5).

17. Véhicule cabriolet selon la revendication 16,
**caractérisé en ce que** le levier d'actionnement est conçu essentiellement en forme de U, en forme de T, en forme de I et/ou en forme de bouton.

18. Véhicule cabriolet selon l'une des revendications 16 à 17,
**caractérisé en ce que** le toit peut être amené par l'intermédiaire de courses multiples de l'organe de levage dans sa position de fermeture et inversement dans sa position de rangement.

19. Véhicule cabriolet selon l'une des revendications 16 à 18,
**caractérisé en ce que** l'organe de levage présente un segment à cliquet qui coopère avec un segment denté.

20. Véhicule cabriolet selon la revendication 19,
**caractérisé en ce que** le segment denté peut être amené dans différentes positions de pivotement par l'intermédiaire de l'organe de levage, le segment denté, par l'intermédiaire d'un organe de transmission, déplace des pièces de la tringlerie de la capote dans différentes positions de fermeture et/ou d'ouverture.

21. Véhicule cabriolet selon la revendication 20,
**caractérisé en ce que** le segment denté peut être fixé par l'intermédiaire d'un levier de transmission avec le châssis de la capote.

22. Véhicule cabriolet selon l'une des revendications 20 à 21
**caractérisé en ce qu'**une pièce à coulisse est fixée sur le châssis de la capote (6) et, dans ses coulisses de guidage, l'organe de transmission est guidé à déplacement avec des butées de fin de course.

23. Véhicule cabriolet selon l'une des revendications 16 à 22,
**caractérisé en ce que** l'organe de réglage de la course n'exerce sur le toit un mouvement d'entraînement de fermeture ou d'entraînement de rangement que pendant son soulèvement.

24. Véhicule cabriolet selon la revendication 23,
**caractérisé en ce que** l'organe de réglage de la course peut-être désaccouplé du toit pendant une course à vide à la manière d'un mouvement d'entraînement et, pendant le désaccouplement, le toit (5) est bloqué dans une position de recul.

25. Véhicule cabriolet selon l'une des revendications 22 à 24, **caractérisé en ce que** la coulisse est conçue dans la pièce de coulisse dans le sens de la longueur sur une course résiduelle du toit lors du processus de fermeture.

26. Véhicule cabriolet selon l'une des revendications 16 à 25,
**caractérisé en ce que** les bras oscillants latéraux du châssis de la capote (6) peuvent être fixés par l'intermédiaire de l'axe de torsion (16) traversant transversalement le véhicule cabriolet (1) sur lequel l'organe de réglage de la course agit centralement par rapport à son mouvement d'entraînement.

27. Véhicule cabriolet selon la revendication 26,
**caractérisé en ce que** l'axe de torsion (16) peut être fixé sur la pièce à coulisse pour bloquer le mouvement rotatif.

28. Véhicule cabriolet selon l'une des revendications 16 à 27,
**caractérisé en ce que** l'organe de levage est conçu comme une pédale mobile au pied.

29. Véhicule cabriolet selon la revendication 28,
**caractérisé en ce que** la pédale au pied peut-être fixée par l'intermédiaire d'un câble Bowden avec le châssis de la capote (6).

30. Véhicule cabriolet selon l'une des revendications 28 ou 29, **caractérisé en ce que** le toit (5) peut être amené de sa position de rangement dans sa position de fermeture et inversement par une course de la pédale au pied.

31. Véhicule cabriolet selon l'une des revendications 16 à 30, **caractérisé en ce que** l'organe de levage peut-être fixé par l'intermédiaire d'un milieu de pression avec un réservoir de pression et qu'une pression peut-être établie à l'aide de l'organe de levage dans le réservoir de pression, le réservoir de pression pouvant être fixé avec un organe de réglage pneumatique et/ou hydraulique en vue la détermination du mouvement d'entraînement du toit (5).

32. Véhicule cabriolet selon l'une des revendications 1 à 31 avec au moins un arceau angulaire (14) et un arceau transversal (13),
**caractérisé en ce**
**que** la lunette arrière (10) peut être fixée par l'intermédiaire d'une tringlerie de lunette arrière (15) et les arceaux angulaires (14) par l'intermédiaire d'une tringlerie des arceaux angulaires (21) avec l'axe de torsion (16), tant la lunette arrière (10) avec les pièces de tringlerie de la lunette arrière (15) et l'arceau angulaire (14) par l'intermédiaire de la tringlerie de l'arceau angulaire (21) pouvant pivoter par rapport à l'axe de torsion (16) se trouvant dans une position de repos et avec un étrier de retenue (7) dans une position de montage et de maintenance relevée par pivotement.

33. Véhicule cabriolet selon la revendication 32,
**caractérisé en ce que** les tringleries de l'arceau angulaire (21) peuvent pivoter par rapport à l'axe de torsion (16).

34. Véhicule cabriolet selon l'une de revendications 32 ou 33,
**caractérisé en ce que** l'étrier de retenue (7) du toit (5) et le châssis de la capote (6) sont logés dans des paliers séparés (17,18).

35. Véhicule cabriolet selon l'une des revendications 32 à 34,
**caractérisé en ce que** la lunette arrière (10) et l'arceau angulaire (14) peuvent être amenés dans leur position de montage ou de maintenance par l'intermédiaire de leurs fixations respectives au toit par l'étrier de retenue (7).

36. Véhicule cabriolet selon l'une de revendication 32 à 35,
**caractérisé en ce que** l'étrier de retenue (7) peut-être bloqué dans sa position de montage ou de maintenance par l'intermédiaire d'un rail de retenue (20) s'appuyant sur la carrosserie (3).

37. Véhicule cabriolet selon la revendication 36,
**caractérisé en ce que** la tige de retenue (20) est fixée à pivotement à la carrosserie (3).

38. Véhicule cabriolet selon l'une des revendications 32 à 37,
**caractérisé en ce que** la tringlerie des arceaux angulaires (21) est conçue respectivement comme des leviers de tringlerie d'arceau angulaire (21.1, 21.2), le levier partiel de la tringlerie des arceaux angulaires (21.2) tourné vers le toit pouvant pivoter dans la position de fermeture du toit (5) par rapport à l'autre dans la direction de fermeture du toit (5).

39. Véhicule cabriolet selon l'une des revendications 32 à 38,
**caractérisé en ce que** la tringlerie de lunette arrière (15) est conçue respectivement comme des leviers de tringlerie de lunette arrière en deux parties (15.1, 15.2), le levier de tringlerie de la lunette arrière (15.2) tourné vers la lunette arrière (10) pouvant pivoter dans la position de fermeture du toit (5) par rapport à l'autre levier de tringlerie de lunette arrière (15.1) dans la direction de fermeture du toit (5).

40. Véhicule cabriolet selon la revendication 39,
**caractérisé en ce**
**que** le levier de la tringlerie de la lunette arrière (15.1) opposée à la lunette arrière (10) peut être fixé à rotation bloquée avec l'axe de torsion (16).

41. Véhicule cabriolet selon l'une de revendication 32 à 40,
**caractérisé en ce que** les leviers de la tringlerie de l'arceau angulaire (21.1) sont articulés sur un palier côté carrosserie et peuvent être fixés à pivotement par l'intermédiaire d'un levier de commande (21.3) avec l'axe de torsion (16).

42. Véhicule cabriolet selon l'une des revendications 32 à 41,
**caractérisé en ce que** les pièces de tringlerie de la lunette arrière (15) sont conçues pour se déplacer longitudinalement.

43. Véhicule cabriolet selon l'une des revendications 32 à 42,
**caractérisé en ce que** les pièces de tringlerie de la lunette arrière (15) sont conçues comme des pièces fixées l'une à l'autre de manière amovible.

44. Véhicule cabriolet selon l'une des revendications 32 à 42, **caractérisé en ce que** les pièces de tringlerie de la lunette arrière (15) sont de conception télescopique du moins par zone.

45. Véhicule cabriolet selon l'une des revendications 32 à 44, **caractérisé en ce que** l'étrier de retenue (7) peut être amené dans une position de montage ou de maintenance quasi-verticale dans laquelle la lunette arrière (10) est située dans une position renversée essentiellement verticale.

46. Véhicule cabriolet selon l'une des revendications 32 à 45, **caractérisé en ce que** l'étanchéité de l'étrier de retenue (7) par rapport à la carrosserie (3) du véhicule est assurée sur l'étrier de retenue (7) par l'intermédiaire d'un élément d'étanchéité (28) qui peut être fixé à la carrosserie (3).

47. Véhicule cabriolet selon la revendication 46,
**caractérisé en ce que** la carrosserie possède dans la région de l'appui de l'étrier de retenue (7) une saillie (3.1) sur laquelle l'élément d'étanchéité (28) peut être enfiché lorsque le toit (5) se trouve à l'état fermé.

48. Véhicule cabriolet selon l'une des revendications 32 à 47,
**caractérisé en ce qu'**une capote flexible (19) peut être fixée sur un étrier de retenue (7).

49. Véhicule cabriolet selon la revendication 48,
**caractérisé en ce que** la capote de toit (19) peut être fixée à l'aide d'un bourrelet (26) cousu dans un évidement (25) à l'intérieur de l'étrier de retenue (7).

50. Véhicule cabriolet selon l'une des revendications 48 ou 49,
**caractérisé en ce que** la capote de toit (19) est guidée sur un bord de guidage d'écoulement (27) tourné vers le toit (5).

51. Véhicule cabriolet selon la revendication 50,
**caractérisé en ce que** la capote de toit (19) est guidée directement vers le toit (5) par le bord de guidage d'écoulement (27) et, à cette occasion, ne touche aucune autre pièce de la carrosserie.

52. Véhicule cabriolet selon l'une de revendication 48 à 51,
**caractérisé en ce que** la capote de toit (19) peut être fixée sur une face interne de l'étrier de retenue (7).

53. Véhicule cabriolet selon l'une de revendications précédentes 32 à 52,
**caractérisé en ce que** l'étrier de retenue (7) est situé sous une couverture (8) de carrosserie en forme de couvercle à ouvrir lorsque le toit (5) se trouve à l'état fermé.

54. Véhicule cabriolet selon la revendication 53,
**caractérisé en ce que** l'étrier de retenue (7) peut être fixé dans cette position par un arrêt amovible.

55. Véhicule cabriolet selon l'une des revendications précédentes,
**caractérisé en ce**
**qu'**un élément antérieur du châssis de toit (35) peut être déplacé parallèlement par rapport à un élément central du châssis de toit (34) par des bras en parallélogramme (32.1, 32.2), les bras en parallélogramme (32.1, 32.2) étant fixés de manière articulés à une extrémité avec un élément antérieur du châssis de toit (35) et à l'autre extrémité par l'élément central du châssis de toit (34), une commande des bras en parallélogramme (32.1, 32.2) étant effectuée par un bras de commande (33) qui entre en prise de manière articulée avec une extrémité supérieure (12.1) du bras latéral (12) de manière articulée et au bras de parallélogramme (32.1) à l'autre extrémité de manière articulée, l'extrémité supérieure (12.1) du bras latéral (12) se trouvant dans une position intermédiaire du toit (5) au-dessus du châssis central du toit (34).
